(19) Europäisches Patentamt
European Patent Office
Office européen des brevets

(11) **EP 4 478 671 A1**

(12) **EUROPEAN PATENT APPLICATION**
published in accordance with Art. 153(4) EPC

(43) Date of publication:
**18.12.2024 Bulletin 2024/51**

(51) International Patent Classification (IPC):
**H04L 27/26** (2006.01)

(21) Application number: **23765902.4**

(52) Cooperative Patent Classification (CPC):
**H04L 27/26; H04W 72/12**

(22) Date of filing: **03.03.2023**

(86) International application number:
**PCT/CN2023/079536**

(87) International publication number:
**WO 2023/169324 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.03.2022 CN 202210236510**

(71) Applicant: **SHANGHAI LANGBO
COMMUNICATION TECHNOLOGY
COMPANY LIMITED
Shanghai 200240 (CN)**

(72) Inventors:
• LIU, Zheng
  **Shanghai 201206 (CN)**
• ZHANG, Xiaobo
  **Shanghai 201206 (CN)**

(74) Representative: **Zhang, Fan
  Am Quälenberg 3A
  38124 Braunschweig (DE)**

(54) **METHOD AND APPARATUS FOR USE IN NODE FOR WIRELESS COMMUNICATION**

(57)   The present application discloses a method and apparatus for use in a node for wireless communication. The method comprises: a node receiving a first information block, the first information block being used for determining a first cell set; and monitoring a PDCCH candidate in a first time window, wherein a spacing between subcarriers occupied by the monitored at least one PDCCH candidate is equal to a first subcarrier spacing, the number of PDCCH candidates at the first subcarrier spacing monitored in the first time window is not greater than a first threshold, the number of non-overlapping CCEs at the first subcarrier spacing monitored in the first time window is not greater than a second threshold, the first cell set comprises a cell subset, all serving cells comprised in the cell subset in the first cell set can be scheduled by a same PDCCH candidate, the first threshold and the second threshold are related to a feature proportion value, and the number of serving cells counted in the cell subset comprised in the first cell set is used for determining the feature proportion value. The present application ensures the scheduling performance.

EP 4 478 671 A1

receiving first information block — 101

monitoring at least 1 PDCCH candidate in first time window — 102

100

FIG. 1

**Description**

**BACKGROUND**

**TECHNICAL FIELD**

The present application relates to transmission methods and devices in wireless communication systems, and in particular to a multi-carrier transmission scheme and device in wireless communications.

**RELATED ART**

Application scenarios of future wireless communication systems are becoming increasingly diversified, and different application scenarios have different performance demands on systems. In order to meet different performance requirements of various application scenarios, the 3rd Generation Partner Project (3GPP) Radio Access Network (RAN) #72 plenary decided to conduct the study of New Radio (NR), or what is called fifth Generation (5G). The work Item (WI) of NR was approved at the 3GPP RAN #75 plenary to standardize the NR.

The multi-carrier (including Carrier Aggregation, abbreviated as CA, and Dual Connectivity, abbreviated as DC) techniques is an integral part of New Radio (NR) technology. To adapt to diverse application scenarios and meet different requests, the 3GPP has been working on the evolution of multi-carrier techniques since from the Rel-15.

**SUMMARY**

In the multi-carrier communications, for instance Carrier Aggregation (CA), Cross Carrier Scheduling is supported. In networks supported by the existing standard, such as 5G New Radio (NR) in R17 and of previous versions, for multiple scheduled carriers, scheduling is only supported to be provided on carriers or Physical Downlink Control Channels (PDCCHs) respectively corresponding to the carriers, rather than through a same PDCCH on a same carrier.

To address the issue that a same PDCCH schedules multiple carriers simultaneously in a multicarrier system in NR, the present application discloses a solution. It should be noted that in the description of the present application, PDCCH scheduling in multicarriers is only used as an exemplary application scenario or example; this disclosure is equally applicable to other scenarios confronting similar problems, such as other scenarios having higher demands on the capacity of control channels, which include but are not limited to capacity enhancement system, the system using higher frequency, coverage enhancement system, Unlicensed Spectrum communication, the Internet of Things (IoT), Ultra Reliable Low Latency Communications (URLLC) network and Vehicle-to-Everything (V2X), where similar technical effects can be achieved. Additionally, the adoption of a unified solution for various scenarios, including but not limited to multi-carrier scenarios, contributes to the reduction of hardcore complexity and costs. In the case of no conflict, the embodiments of a first node and the characteristics in the embodiments may be applied to a second node, and vice versa. Particularly, for interpretations of the terminology, nouns, functions and variables (unless otherwise specified) in the present application, refer to definitions given in TS36 series, TS38 series and TS37 series of 3GPP specifications.

The present application provides a method in a first node for wireless communications, comprising:

receiving a first information block, the first information block being used to determine a first cell set, the first cell set including multiple serving cells; and
monitoring at least 1 PDCCH candidate in a first time window, the first time window including at least 1 multicarrier symbol consecutive in time domain;
herein, a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0.

In one embodiment, the number of serving cells counted for at least one cell subset included in the first cell set is used to determine a characteristic proportional value, thus reducing the blocking probability of scheduling.

According to one aspect of the present application, the above method is characterized in that a characteristic cell subset is a cell subset included in the first cell set, and the characteristic cell subset includes multiple serving cells; a number of serving cell(s) being counted for the characteristic cell subset is unequal to the number of serving cells included in the characteristic cell subset.

According to one aspect of the present application, the above method is characterized in comprising:

receiving a second information block;

herein, the second information block is used to determine a first scaling factor, the first scaling factor being no less than 0; a product of the number of serving cell(s) counted for at least one cell subset included in the first cell set and the first scaling factor is used to determine the characteristic proportional value.

In one embodiment, a product of the number of serving cells counted for at least one cell subset included in the first cell set and the first scaling factor is used to determine the characteristic proportional value, thereby increasing the configuration flexibility.

According to one aspect of the present application, the above method is characterized in that each serving cell included in the first cell set corresponds to a scheduling indication value, serving cells included in the first cell set that correspond to equal scheduling indication values and have the same scheduling cell form a cell subset in the first cell set; at least one of a number of bits of at least one field included in a DCI format or a number of fields included in a DCI format is related to a number of serving cells included in the cell subset in the first cell set being scheduled.

In one embodiment, by associating at least one of the number of bits of at least one field included in a DCI format or the number of fields included in the DCI format with the number of serving cells included in the cell subset being scheduled, the configuration flexibility is further enhanced and the complexity of standard and signaling overhead are reduced.

According to one aspect of the present application, the above method is characterized in comprising:

transmitting a third information block;

herein, the first threshold is equal to a maximum integer that is no greater than a first intermediate value, and the second threshold is equal to a maximum integer that is no greater than a second intermediate value; the third information block is used to indicate a first quantity value, the first quantity value being a positive integer, and a number of serving cell(s) included in any cell subset included in the first cell set is no greater than the first quantity value; the first SCS is used to determine a first reference quantity value and a second reference quantity value; the first quantity value, the first reference quantity value and the characteristic proportional value are used together to determine the first intermediate value, while the first quantity value, the second reference quantity value and the characteristic proportional value are used together to determine the second intermediate value.

According to one aspect of the present application, the above method is characterized in that a cell subset included in the first cell set corresponds to a first identifier, and the cell subset corresponding to the first identifier includes multiple serving cells, and a scheduling cell for all the serving cells included in the cell subset corresponding to the first identifier is a target scheduling cell; the first identifier is used to determine in a search space set on the target scheduling cell a PDCCH candidate that is used to schedule the cell subset corresponding to the first identifier.

According to one aspect of the present application, the above method is characterized in that a first PDCCH candidate and a second PDCCH candidate are both used to schedule one same cell subset included in the first cell set, the first PDCCH candidate and the second PDCCH candidate occupying same CCE(s), and the first PDCCH candidate has a same scrambling as the second PDCCH candidate, a DCI format carried by the first PDCCH candidate is of the same size as a DCI format carried by the second PDCCH candidate, and an index of the first PDCCH candidate is unequal to an index of the second PDCCH candidate; only one PDCCH candidate between the first PDCCH candidate and the second PDCCH candidate is counted for monitoring.

In one embodiment, between the two of a first PDCCH candidate and a second PDCCH candidate only one PDCCH candidate is counted for monitoring, thereby avoiding the case in which the number of monitoring times of the PDCCH candidates exceeds the UE's capacity or the complexity of the PDCCH reception increases, while at the same time making full use of the capability of PDCCH candidate monitoring, to further decrease the probability of PDCCH blocking and improve scheduling flexibility.

The present application provides a method in a second node for wireless communications, comprising:

transmitting a first information block, the first information block being used to determine a first cell set, the first cell set including multiple serving cells; and

determining at least 1 PDCCH candidate in a first time window, the first time window including at least 1 multicarrier symbol consecutive in time domain;

herein, a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0.

According to one aspect of the present application, the above method is characterized in that a characteristic cell subset is a cell subset included in the first cell set, and the characteristic cell subset includes multiple serving cells; a number of serving cell(s) being counted for the characteristic cell subset is unequal to the number of serving cells included in the characteristic cell subset.

According to one aspect of the present application, the above method is characterized in comprising:

transmitting a second information block;
herein, the second information block is used to indicate a first scaling factor, the first scaling factor being no less than 0; a product of the number of serving cell(s) counted for at least one cell subset included in the first cell set and the first scaling factor is used to determine the characteristic proportional value.

According to one aspect of the present application, the above method is characterized in that each serving cell included in the first cell set corresponds to a scheduling indication value, serving cells included in the first cell set that correspond to equal scheduling indication values and have the same scheduling cell form a cell subset in the first cell set; at least one of a number of bits of at least one field included in a DCI format or a number of fields included in a DCI format is related to a number of serving cells included in the cell subset in the first cell set being scheduled.

According to one aspect of the present application, the above method is characterized in comprising:

receiving a third information block;
herein, the first threshold is equal to a maximum integer that is no greater than a first intermediate value, and the second threshold is equal to a maximum integer that is no greater than a second intermediate value; the third information block is used to indicate a first quantity value, the first quantity value being a positive integer, and a number of serving cell(s) included in any cell subset included in the first cell set is no greater than the first quantity value; the first SCS is used to determine a first reference quantity value and a second reference quantity value; the first quantity value, the first reference quantity value and the characteristic proportional value are used together to determine the first intermediate value, while the first quantity value, the second reference quantity value and the characteristic proportional value are used together to determine the second intermediate value.

According to one aspect of the present application, the above method is characterized in that a cell subset included in the first cell set corresponds to a first identifier, and the cell subset corresponding to the first identifier includes multiple serving cells, and a scheduling cell for all the serving cells included in the cell subset corresponding to the first identifier is a target scheduling cell; the first identifier is used to determine in a search space set on the target scheduling cell a PDCCH candidate that is used to schedule the cell subset corresponding to the first identifier.

According to one aspect of the present application, the above method is characterized in that a first PDCCH candidate and a second PDCCH candidate are both used to schedule one same cell subset included in the first cell set, the first PDCCH candidate and the second PDCCH candidate occupying same CCE(s), and the first PDCCH candidate has a same scrambling as the second PDCCH candidate, a DCI format carried by the first PDCCH candidate is of the same size as a DCI format carried by the second PDCCH candidate, and an index of the first PDCCH candidate is unequal to an index of the second PDCCH candidate; only one PDCCH candidate between the first PDCCH candidate and the second PDCCH candidate is counted for monitoring.

The present application provides a first node for wireless communications, comprising:

a transceiver, receiving a first information block, the first information block being used to determine a first cell set, the first cell set including multiple serving cells; and
a first receiver, monitoring at least 1 PDCCH candidate in a first time window, the first time window including at least 1 multicarrier symbol consecutive in time domain;

herein, a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0.

The present application provides a second node for wireless communications, comprising:

a second transceiver, transmitting a first information block, the first information block being used to determine a first cell set, the first cell set including multiple serving cells; and
a first transmitter, determining at least 1 PDCCH candidate in a first time window, the first time window including at least 1 multicarrier symbol consecutive in time domain;
herein, a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0.

## BRIEF DESCRIPTION OF THE DRAWINGS

Other features, objects and advantages of the present application will become more apparent from the detailed description of non-restrictive embodiments taken in conjunction with the following drawings:

FIG. 1 illustrates a flowchart of a first information block and PDCCH candidates according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of a first node and a second node according to one embodiment of the present application.
FIG. 5 illustrates a flowchart of radio signal transmission according to one embodiment of the present application.
FIG. 6 illustrates a schematic diagram of a characteristic cell subset according to one embodiment of the present application.
FIG. 7 illustrates a schematic diagram of a first scaling factor according to one embodiment of the present application.
FIG. 8 illustrates a schematic diagram of a scheduling indication value according to one embodiment of the present application.
FIG. 9 illustrates a schematic diagram of a first threshold and a second threshold according to one embodiment of the present application.
FIG. 10 illustrates a schematic diagram of a first identifier according to one embodiment of the present application.
FIG. 11 illustrates a schematic diagram of a relationship between a first PDCCH candidate and a second PDCCH candidate according to one embodiment of the present application.
FIG. 12 illustrates a structure block diagram of a processing device in a first node according to one embodiment of the present application.

FIG. 13 illustrates a structure block diagram of a processing device in a second node according to one embodiment of the present application.

## DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

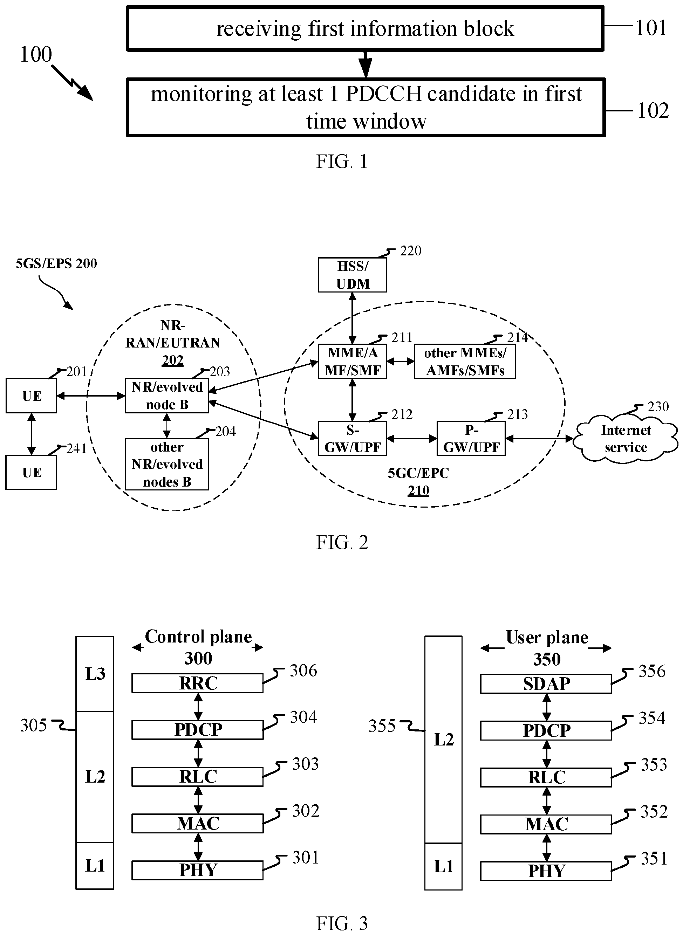

Embodiment 1 illustrates a flowchart 100 of a first information block and PDCCH candidates according to one embodiment of the present application, as shown in FIG. 1. In FIG. 1, each step represents a step, it should be particularly noted that the sequence order of each box herein does not restrict a chronological order of steps marked respectively by these boxes.

In Embodiment 1, the first node in this application receives a first information block in step 101, the first information block being used to determine a first cell set, the first cell set including multiple serving cells; and the first node in this application monitors at least 1 PDCCH candidate in a first time window in step 102, the first time window including at least 1 multicarrier symbol consecutive in time domain; herein, a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0.

In one embodiment, the first information block is transmitted via an air interface or a wireless interface.

In one embodiment, the first information block is transmitted via a higher layer signaling or a physical layer signaling.

In one embodiment, the first information block comprises all or part of a higher layer signaling or a physical layer signaling.

In one embodiment, the first information block comprises all or partial Information Elements (IEs) in a Radio Resource Control (RRC) signaling.

In one embodiment, the first information block comprises all or part of fields in one Information Element (IE) in a Radio Resource Control (RRC) signaling.

In one embodiment, the first information block comprises all or part of a Medium Access Control (MAC) layer signaling.

In one embodiment, the first information block comprises all or part of a System Information Block (SIB).

In one embodiment, the first information block is transmitted through a Physical Downlink Shared Channel (PDSCH).

In one embodiment, the first information block is UE-specific.

In one embodiment, the first information block comprises an Information Element (IE) "CellGroupConfig".

In one embodiment, the first information block comprises a field "sCellToAddModList".

In one embodiment, the first information block comprises a field "sCellToReleaseList".

In one embodiment, the first information block comprises a field "secondaryCellGroup".

In one embodiment, the first information block comprises a field "masterCellGroup".

In one embodiment, the first information block is configured Per Serving Cell group.

In one embodiment, the first information block comprises all or partial fields in a Downlink Control Information (DCI) format.

In one embodiment, the first information block comprises an IE "CrossCarrierSchedulingConfig".

In one embodiment, the first information block comprises an IE "ServingCellConfig".

In one embodiment, the above sentence "the first information block being used to determine a first cell set" includes the following meaning: the first information block comprises K1 sub-information-block(s), K1 being 1 less than the number of serving cells included in the first cell set, the K1 sub-information-block(s) is(are respectively) used to determine K1 serving cell(s), and any of the K1 serving cell(s) belongs to the first cell set.

In one embodiment, the above sentence "the first information block being used to determine a first cell set" includes the following meaning: the first information block is used by the first node in the present application to determine the first cell set.

In one embodiment, the above sentence "the first information block being used to determine a first cell set" includes the following meaning: all or part of fields included in the first information block are used to explicitly or implicitly indicate serving cells included in the first cell set.

In one embodiment, the above sentence "the first information block being used to determine a first cell set" includes the following meaning: all or part of fields included in the first information block are used to explicitly or implicitly indicate a list of serving cells included in the first cell set.

In one embodiment, the statement in the claims that "the first information block being used to determine a first cell set" includes the following meaning: the first information block is used to determine an index of a secondary cell (SCell) included in the first cell set.

In one embodiment, the statement in the claims that "the first information block being used to determine a first cell set" includes the following meaning: the first information block is used to explicitly or implicitly indicate the scheduling cell of at least one serving cell included in the first cell set, the first cell set being composed of serving cells having the same scheduling cell.

In one embodiment, the statement in the claims that "the first information block being used to determine a first cell set" includes the following meaning: the first information block is used to explicitly or implicitly indicate configuration information for cross carrier scheduling (CCS) of at least one serving cell included in the first cell set.

In one embodiment, the first cell set includes all of the serving cells with which the first node is configured.

In one embodiment, the first cell set includes part of the serving cells with which the first node is configured.

In one embodiment, any serving cell included in the first cell set is an Activated Cell.

In one embodiment, the first cell set includes a serving cell which is a Deactivated Cell.

In one embodiment, the number of serving cells included in the first cell set is equal to 2.

In one embodiment, the number of serving cells included in the first cell set is greater than 2.

In one embodiment, the number of serving cells included in the first cell set is no greater than 16.

In one embodiment, any two serving cells included in the first cell set are not identical.

In one embodiment, any serving cell included in the first cell set corresponds to a Component Carrier (CC).

In one embodiment, the first cell set includes at least one Primary Cell (Pcell) and one Secondary Cell (Scell).

In one embodiment, multiple serving cells included in the first cell set may be scheduled by the same one Physical Downlink Control Channel (PDCCH).

In one embodiment, multiple serving cells included in the first cell set may be scheduled by the same one PDCCH candidate.

In one embodiment, multiple serving cells included in the first cell set may be scheduled by the same one PDCCH candidate carrying a given DCI Format.

In one embodiment, scheduling cells of all the serving cells included in the first cell set are the same serving cell.

In one embodiment, the first cell set includes two serving cells that have different scheduling cells.

In one embodiment, active bandwidth parts (BWPs) on corresponding scheduling cells of any two serving cells included in the first cell set have equal subcarrier spacings.

In one embodiment, the first cell set includes two serving cells with active BWPs on corresponding scheduling cells having unequal subcarrier spacings.

In one embodiment, a Primary Cell (Pcell) included in the first cell set is scheduled by a Secondary Cell.

In one embodiment, a Primary Cell (Pcell) included in the first cell set is only Self-Scheduled.

In one embodiment, a Primary Cell (Pcell) included in the first cell set is both Self-Scheduled and Cross Carrier Scheduled.

In one embodiment, all serving cells included in the first cell set belong to the same one Cell Group.

In one embodiment, the first cell set includes two serving cells belonging to different Cell Groups.

In one embodiment, all serving cells included in the first cell set belong to the same one Master Cell Group (MCG).

In one embodiment, all serving cells included in the first cell set belong to the same one Secondary Cell Group (SCG).

In one embodiment, the first time window is a slot.

In one embodiment, the first time window consists of multiple time-domain consecutive slots.

In one embodiment, the first time window is a span.

In one embodiment, the first time window is time-domain resources occupied by an Aligned Span.

In one embodiment, any multicarrier symbol comprised by the first time window is an Orthogonal Frequency Division Multiplexing (OFDM) Symbol.

In one embodiment, any multicarrier symbol comprised by the first time window is a time-domain symbol.

In one embodiment, the first time window comprises multiple time-domain consecutive multicarrier symbols.

In one embodiment, the first time window is a shortest time interval of all time intervals between earliest OFDM symbols in two PDCCH Occasions.

In one embodiment, a number of multicarrier symbols comprised by the first time window is equal to one of positive integers comprised by a Combination.

In one embodiment, time-domain resources occupied by any PDCCH candidate monitored in the first time window belong to the first time window.

In one embodiment, monitoring of any PDCCH candidate in the first time window is implemented through Decoding of the PDCCH candidate.

In one embodiment, monitoring of any PDCCH candidate in the first time window is implemented through Blind Decoding of the PDCCH candidate.

In one embodiment, monitoring of any PDCCH candidate in the first time window is implemented through decoding and CRC check of the PDCCH candidate.

In one embodiment, monitoring of any PDCCH candidate in the first time window is implemented through decoding and CRC of the PDCCH candidate, with CRC being scrambled by a Radio Network Temporary Identity (RNTI).

In one embodiment, monitoring of any PDCCH candidate in the first time window is implemented based on Decoding of the PDCCH candidate by one or more DCI Formats being monitored.

In one embodiment, any PDCCH candidate monitored in the first time window occupies a positive integer number of Control Channel Element(s) (CCE(s)).

In one embodiment, any PDCCH candidate monitored in the first time window occupies 1 CCE or 2 CCEs or 4 CCEs or 8 or 16 CCEs.

In one embodiment, any PDCCH candidate monitored in the first time window is a PDCCH candidate that uses one or more DCI formats.

In one embodiment, any PDCCH candidate monitored in the first time window is a PDCCH candidate that uses a given DCI format.

In one embodiment, any PDCCH candidate monitored in the first time window is a PDCCH candidate that uses one or more DCI Payload Sizes.

In one embodiment, any PDCCH candidate monitored in the first time window is a PDCCH candidate that uses a given DCI Payload Size.

In one embodiment, a subcarrier spacing (SCS) configured for a BWP to which at least one PDCCH candidate monitored in the first time window belongs in frequency domain is equal to the first subcarrier spacing.

In one embodiment, a subcarrier spacing (SPS) configured for an active BWP in a serving cell to which at least one PDCCH candidate monitored in the first time window belongs is equal to the first subcarrier spacing.

In one embodiment, a subcarrier spacing (SPS) configured for an active BWP in a Scheduling Cell to which at least one PDCCH candidate monitored in the first time window belongs is equal to the first subcarrier spacing.

In one embodiment, the first subcarrier spacing is measured in Hz.

In one embodiment, the first subcarrier spacing is measured in kHz.

In one embodiment, the first subcarrier spacing is equal to one of 15kHz, 30kHz, 60kHz, 120kHz, or 240kHz.

In one embodiment, the first time window comprises at least one time-domain consecutive multicarrier symbol corresponding to the first subcarrier spacing.

In one embodiment, when the first time window comprises more than one multicarrier symbol, any two multi-carrier symbols comprised by the first time window are of an equal time length.

In one embodiment, when the first time window comprises more than one multicarrier symbol, the first time window comprises two multicarrier symbols of unequal time lengths.

In one embodiment, the above sentence that "the first SCS being used to determine a time length of one multicarrier symbol included in the first time window" includes the following meaning: the first SCS is used by the first node of the present application to determine the time length of one multicarrier symbol included in the first time window.

In one embodiment, the above sentence that "the first SCS being used to determine a time length of one multicarrier symbol included in the first time window" includes the following meaning: the first SCS is used to determine the time length of any multicarrier symbol included in the first time window.

In one embodiment, the above sentence that "the first SCS being used to determine a time length of one multicarrier symbol included in the first time window" includes the following meaning: the first SCS is used to determine, according to a mapping relationship, the time length of any multicarrier symbol included in the first time window.

In one embodiment, the above sentence that "the first SCS being used to determine a time length of one multicarrier symbol included in the first time window" includes the following meaning: the first SCS is used to determine a number of multicarrier symbols included in a subframe to which the first time window belongs, and the number of multicarrier symbols included in the subframe to which the first time window belongs is used to determine the time length of one multicarrier symbol included in the first time window.

In one embodiment, the above sentence that "the first SCS being used to determine a time length of one multicarrier symbol included in the first time window" includes the following meaning: the first SCS is used to determine a number of slots included in a subframe to which the first time window belongs, and the number of slots included in the subframe to which the first time window belongs is used to determine the time length of one multicarrier symbol included in the first time window.

In one embodiment, the above sentence that "the first SCS being used to determine a time length of one multicarrier symbol included in the first time window" includes the following meaning: a Configuration Index of the first SCS is used to determine the time length of any multicarrier symbol included in the first time window.

In one embodiment, further comprising:

receiving a first synchronization signal;
herein, the first synchronization signal is used to determine a position of the first time window in time domain.

In one embodiment, further comprising:

receiving a first synchronization signal;
herein, the first synchronization signal is used to determine timing of the first time window.

In one embodiment, the number of PDCCH candidates using the first subcarrier spacing being monitored in the first time window is for a scheduled cell included in the first cell set.

In one embodiment, the number of PDCCH candidates using the first subcarrier spacing being monitored in the first time window is for a cell subset included in the first cell set.

In one embodiment, the number of PDCCH candidates using the first subcarrier spacing being monitored in the first time window is for all of the scheduling cells of the first cell set that have an active BWP and use the first subcarrier spacing.

In one embodiment, statements that "the number of PDCCH candidates using the first subcarrier spacing being monitored in the first time window" and "the number of PDCCH candidates using the first subcarrier spacing being monitored in the first time window for any serving cell included in the first cell set" are equivalent or may be used interchangeably.

In one embodiment, statements that "the number of PDCCH candidates using the first subcarrier spacing being monitored in the first time window" and "the number of PDCCH candidates using the first subcarrier spacing being monitored in the first time window for any cell subset included in the first cell set" are equivalent or may be used interchangeably.

In one embodiment, statements that "the number of PDCCH candidates using the first subcarrier spacing being monitored in the first time window" and "the total number of PDCCH candidates monitored in the first time window for all scheduling cells that use the first subcarrier spacing belonging to the first cell set" are equivalent or may be used interchangeably.

In one embodiment, statements that "the number of PDCCH candidates using the first subcarrier spacing being monitored in the first time window" and "the total number of blind detections or blind decodings for PDCCHs using the first subcarrier spacing in the first time window" are equivalent or may be used interchangeably.

In one embodiment, statements that "the number of PDCCH candidates using the first subcarrier spacing being monitored in the first time window" and "the total number of channel decodings for PDCCHs using the first subcarrier spacing in the first time window" are equivalent or may be used interchangeably.

In one embodiment, statements that "the number of PDCCH candidates using the first subcarrier spacing being monitored in the first time window" and "the total number of blind detections or blind decodings for PDCCHs using the first subcarrier spacing in the first time window for one or more DCI Formats" are equivalent or may be used interchangeably.

In one embodiment, statements that "the number of PDCCH candidates using the first subcarrier spacing being monitored in the first time window" and "the number of PDCCH candidates using the first subcarrier spacing being monitored in the first time window that are used to schedule at least one serving cell included in the first cell set" are equivalent or may be used interchangeably.

In one embodiment, statements that "the number of PDCCH candidates using the first subcarrier spacing being monitored in the first time window" and "the number of PDCCH candidates being monitored in the first time window using the first subcarrier spacing and assumed to carry a given DCI format" are equivalent or may be used interchangeably.

In one embodiment, statements that "the number of PDCCH candidates using the first subcarrier spacing being monitored in the first time window" and "the total number of times of monitoring for PDCCHs using the first subcarrier spacing performed in the first time window" are equivalent or may be used interchangeably

In one embodiment, the number of PDCCH candidates using the first subcarrier spacing being monitored in the first time window is configured.

In one embodiment, the number of PDCCH candidates using the first subcarrier spacing being monitored in the first time window is configured in a scheduling cell for the first cell set.

In one embodiment, any two PDCCH candidates monitored in the first time window have different characteristic attributes, where the characteristic attributes include at least one of occupied CCEs, used Scrambling, or a corresponding DCI Payload Size.

In one embodiment, two PDCCH candidates having identical characteristic attribute(s) are not simultaneously counted for a number of PDCCH candidates being monitored, where the characteristic attributes include at least one of occupied CCEs, used Scrambling, or a corresponding DCI Payload Size.

In one embodiment, two PDCCH candidates having identical characteristic attribute(s) are not simultaneously counted for a number of times of monitoring, where the characteristic attributes include at least one of occupied CCEs, used Scrambling, or a corresponding DCI Payload Size.

In one embodiment, of two PDCCH candidates having identical characteristic attribute(s) only one PDCCH candidate is counted for a number of PDCCH candidates being monitored, where the characteristic attributes include at least one of occupied CCEs, used Scrambling, or a corresponding DCI Payload Size.

In one embodiment, statements that "a number of PDCCH candidate(s) using the first SCS being monitored in the first time window is no greater than a first threshold" and "the first node is not required to monitor PDCCH candidates using the first SCS of which the number exceeds the first threshold in the first time window" are equivalent or may be used interchangeably.

In one embodiment, statements that "a number of PDCCH candidate(s) using the first SCS being monitored in the first time window is no greater than a first threshold" and "the first node does not expect that a number of PDCCH candidates using the first SCS being monitored in the first time window exceeds the first threshold" are equivalent or may be used interchangeably.

In one embodiment, the network side ensures during its configuration that a number of PDCCH candidates using the first SCS monitored in the first time window does not exceed the first threshold.

In one embodiment, when the number of PDCCH candidates using the first SCS monitored in the first time window is configured to exceed the first threshold, the processing of the first node of the present application is determined by Implementation.

In one embodiment, when the number of PDCCH candidates using the first SCS monitored in the first time window is configured to exceed the first threshold, the first node of the present application may either monitor the PDCCH candidates using the first SCS beyond the first threshold, or drop monitoring the PDCCH candidates using the first SCS beyond the first threshold.

In one embodiment, the number of PDCCH candidates using the first SCS monitored in the first time window is less than the first threshold

In one embodiment, the number of PDCCH candidates using the first SCS monitored in the first time window may be equal to the first threshold.

In one embodiment, the number of non-overlapped CCEs using the first subcarrier spacing being monitored in the first time window is for a scheduled cell included in the first cell set.

In one embodiment, the number of non-overlapped CCEs using the first subcarrier spacing being monitored in the first time window is for a cell subset included in the first cell set.

In one embodiment, the number of non-overlapped CCEs using the first subcarrier spacing being monitored in the first time window is for all of the scheduling cells of the first cell set that have an active BWP and use the first subcarrier spacing.

In one embodiment, statements that "the number of non-overlapped CCEs using the first subcarrier spacing being monitored in the first time window" and "the number of non-overlapped CCEs using the first subcarrier spacing being monitored in the first time window for any serving cell included in the first cell set" are equivalent or may be used interchangeably.

In one embodiment, statements that "the number of non-overlapped CCEs using the first subcarrier spacing being monitored in the first time window" and "the number of non-overlapped CCEs using the first subcarrier spacing being monitored in the first time window for any cell subset included in the first cell set" are equivalent or may be used interchangeably.

In one embodiment, statements that "the number of non-overlapped CCEs using the first subcarrier spacing being monitored in the first time window" and "the total number of non-overlapped CCEs monitored in the first time window for all scheduling cells that use the first subcarrier spacing belonging to the first cell set" are equivalent or may be used interchangeably.

In one embodiment, statements that "the number of non-overlapped CCEs using the first subcarrier spacing being monitored in the first time window" and "the total number of non-overlapped CCEs using the first subcarrier spacing monitored in the first time window that are occupied by at least one PDCCH candidate" are equivalent or may be used interchangeably.

In one embodiment, statements that "the number of non-overlapped CCEs using the first subcarrier spacing being monitored in the first time window" and "the total number of non-overlapped CCEs using the first subcarrier spacing by which the time-domain resources occupied belong to the first time window" are equivalent or may be used interchangeably.

In one embodiment, statements that "the number of non-overlapped CCEs using the first subcarrier spacing being monitored in the first time window" and "the total number of non-overlapped CCEs being monitored using the first subcarrier spacing by which the time-domain resources occupied belong to the first time window" are equivalent or may be used interchangeably.

In one embodiment, statements that "the number of non-overlapped CCEs using the first subcarrier spacing being monitored in the first time window" and "the total number of non-overlapped CCEs occupied by at least one PDCCH candidate using the first subcarrier spacing by which the time-domain resources occupied belong to the first time window" are equivalent or may be used interchangeably.

In one embodiment, statements that "the number of non-overlapped CCEs using the first subcarrier spacing being monitored in the first time window" and "the total number of non-overlapped CCEs being monitored using the first subcarrier spacing by which the time-domain resources occupied belong to the first time window and by which the frequency-domain resources occupied belong to an active BWP on serving cell(s) of the first cell set" are equivalent or may be used interchangeably.

In one embodiment, when two CCEs correspond to different CORESET indexes or correspond to different start time-domain symbols for receptions of respectively corresponding PDCCH candidates, the two CCEs are non-overlapped.

In one embodiment, the first threshold is equal to $M_{\mathrm{PDCCH}}^{\mathrm{total,slot},\mu}$, where $\mu$ represents an index of the first subcarrier spacing and the first time window is one slot.

In one embodiment, the first threshold is equal to $min\left(M_{\mathrm{PDCCH}}^{\mathrm{max,slot},\mu}, M_{\mathrm{PDCCH}}^{\mathrm{total,slot},\mu}\right)$, where $\mu$ represents an index of the first subcarrier spacing and the first time window is one slot.

In one embodiment, the first threshold is equal to $min\left(\gamma \cdot M_{PDCCH}^{max,slot,\mu}, M_{PDCCH}^{total,slot,\mu}\right)$, where $\mu$ represents an index of the first subcarrier spacing and the first time window is one slot, and $\gamma$ represents a factor indicated by a capability report of the first node.

In one embodiment, the first threshold is equal to $M_{\mathrm{PDCCH}}^{\mathrm{total},(X,Y),\mu}$, where $\mu$ represents an index of the first subcarrier spacing and the first time window is X time-domain consecutive multicarrier symbols.

In one embodiment, the first threshold is equal to $\left(M_{\mathrm{PDCCH}}^{\mathrm{max},(X,Y),\mu}, M_{\mathrm{PDCCH}}^{\mathrm{total},(X,Y),\mu}\right)$, where $\mu$ represents an index of the first subcarrier spacing and the first time window is X time-domain consecutive multicarrier symbols.

In one embodiment, the second threshold is equal to $C_{\mathrm{PDCCH}}^{\mathrm{total,slot},\mu}$, where $\mu$ represents an index of the first subcarrier spacing and the first time window is one slot.

In one embodiment, the second threshold is equal to $min\left(C_{\mathrm{PDCCH}}^{\mathrm{max,slot},\mu}, C_{\mathrm{PDCCH}}^{\mathrm{total,slot},\mu}\right)$, where $\mu$ represents an index of the first subcarrier spacing and the first time window is one slot.

In one embodiment, the second threshold is equal to $min\left(\gamma \cdot C_{\mathrm{PDCCH}}^{\mathrm{max,slot},\mu}, C_{\mathrm{PDCCH}}^{\mathrm{total,slot},\mu}\right)$, where $\mu$ represents an index of the first subcarrier spacing and the first time window is one slot, and $\gamma$ represents a factor indicated by a capability report of the first node.

In one embodiment, the second threshold is equal to $C_{\mathrm{PDCCH}}^{\mathrm{total},(X,Y),\mu}$, where $\mu$ represents an index of the first subcarrier spacing and the first time window is X time-domain consecutive multicarrier symbols.

In one embodiment, the second threshold is equal to $min\left(C_{\mathrm{PDCCH}}^{\mathrm{max},(X,Y),\mu}, C_{\mathrm{PDCCH}}^{\mathrm{total},(X,Y),\mu}\right)$, where $\mu$ represents an index of the first subcarrier spacing and the first time window is X time-domain consecutive multicarrier symbols.

In one embodiment, the first threshold and the second threshold may or may not be equal.

In one embodiment, the first threshold and the second threshold are mutually independent.

In one embodiment, the first threshold and the second threshold are unrelated.

In one embodiment, the first threshold and the second threshold are related.

In one embodiment, the first threshold and the second threshold are linearly correlated.

In one embodiment, there is a proportional relationship between the first threshold and the second threshold.

In one embodiment, statements that "the at least 1 PDCCH candidate being monitored in the first time window is used to schedule at least one serving cell included in the first cell set" and "at least 1 PDCCH candidate monitored in the first time window belongs to a scheduling cell of at least one serving cell included in the first cell set" are equivalent or may be used interchangeably.

In one embodiment, statements that "the at least 1 PDCCH candidate being monitored in the first time window is used to schedule at least one serving cell included in the first cell set" and "the at least 1 PDCCH candidate monitored in the first time window is used to schedule channel(s) or signal(s) in at least one serving cell included in the first cell set" are equivalent or may be used interchangeably.

In one embodiment, statements that "the at least 1 PDCCH candidate being monitored in the first time window is used to schedule at least one serving cell included in the first cell set" and "the at least 1 PDCCH candidate by which the time-domain resources occupied belong to the first time window is monitored in the scheduling cell of at least one serving cell included in the first cell set" are equivalent or may be used interchangeably.

In one embodiment, statements that "the at least 1 PDCCH candidate being monitored in the first time window is used to schedule at least one serving cell included in the first cell set" and "at least 1 PDCCH candidate by which the time-domain resources occupied belong to the first time window is configured in the scheduling cell of at least one serving cell included in the first cell set" are equivalent or may be used interchangeably.

In one embodiment, the first cell set includes only one cell subset.

In one embodiment, the first cell set includes multiple cell subsets.

In one embodiment, the first cell set includes only one cell subset, and the cell subset included in the first cell set is the first cell set.

In one embodiment, the first cell set includes a cell subset comprising only 1 serving cell.

In one embodiment, any cell subset included in the first cell set includes multiple serving cells.

In one embodiment, the first cell set includes a cell subset comprising multiple serving cells.

In one embodiment, any cell subset included in the first cell set consists of 1 or more serving cells in the first cell set.

In one embodiment, when the first cell set includes multiple cell subsets, any two cell subsets included in the first cell set are not identical.

In one embodiment, when the first cell set includes multiple cell subsets, there exists no overlapping serving cell between any two cell subsets included in the first cell set

In one embodiment, when the first cell set includes multiple cell subsets, the first cell set includes two cell subsets between which there exists at least one overlapping serving cell.

In one embodiment, a number of serving cells included in one cell subset of the first cell set that can be simultaneously scheduled for downlink is equal to a number of serving cells included in one cell subset of the first cell set that can be simultaneously scheduled for uplink.

In one embodiment, a number of serving cells included in one cell subset of the first cell set that can be simultaneously scheduled for downlink is unequal to a number of serving cells included in one cell subset of the first cell set that can be simultaneously scheduled for uplink.

In one embodiment, statements that "all serving cell(s) included in one cell subset in the first cell set can be scheduled by one same PDCCH candidate" and "all serving cell(s) included in a cell subset in the first cell set can be scheduled by the same PDCCH" are equivalent or may be used interchangeably.

In one embodiment, statements that "all serving cell(s) included in one cell subset in the first cell set can be scheduled by one same PDCCH candidate" and "scheduling information for any two serving cells included in a cell subset in the first cell set is included in the same DCI format" are equivalent or may be used interchangeably.

In one embodiment, statements that "all serving cell(s) included in one cell subset in the first cell set can be scheduled by one same PDCCH candidate" and "a cell subset in the first cell set is composed of serving cells in the first cell set that can be scheduled by the same PDCCH" are equivalent or may be used interchangeably.

In one embodiment, statements that "all serving cell(s) included in one cell subset in the first cell set can be scheduled by one same PDCCH candidate" and "a target cell subset is a cell subset included in the first cell set, and all of the serving cells included in the target cell subset can be scheduled by the same PDCCH" are equivalent or may be used interchangeably.

In one embodiment, statements that "all serving cell(s) included in one cell subset in the first cell set can be scheduled by one same PDCCH candidate" and "any cell subset in the first cell set is composed of serving cells that can be scheduled by the same PDCCH" are equivalent or may be used interchangeably.

In one embodiment, statements that "all serving cell(s) included in one cell subset in the first cell set can be scheduled by one same PDCCH candidate" and "all serving cell(s) included in any cell subset in the first cell set can be scheduled by the same PDCCH or the same DCI format" are equivalent or may be used interchangeably.

In one embodiment, the statement in the claims that "all serving cell(s) included in one cell subset in the first cell set can be scheduled by one same PDCCH candidate" includes the following meaning: a first serving cell and a second serving cell are two different serving cells in a cell subset included in the first cell set, and the first serving cell and the second serving cell can be scheduled by the same PDCCH or the same DCI format.

In one embodiment, the first information block is used to explicitly or implicitly indicate that the first cell set includes multiple serving cells being scheduled by the same PDCCH or the same DCI format.

In one embodiment, an information block other than the first information block is used to explicitly or implicitly indicate that the first cell set includes multiple serving cells being scheduled by the same PDCCH or the same DCI format.

In one embodiment, the characteristic proportional value is equal to

$$\left(N_{\text{cells},0}^{\text{DL},\mu} + \gamma \cdot N_{\text{cells},1}^{\text{DL},\mu}\right)\Big/\sum_{j=0}^{3}\left(N_{\text{cells},0}^{\text{DL},j} + \gamma \cdot N_{\text{cells},1}^{\text{DL},j}\right).$$

In one embodiment, the characteristic proportional value is equal to $N_{\text{cells,r16}}^{\text{DL},(X,Y),\mu}\Big/\sum_{j=0}^{1}N_{\text{cells,r16}}^{\text{DL},j}$.

In one embodiment, the characteristic proportional value is greater than 0.

In one embodiment, the characteristic proportional value can be equal to 0, when the first cell set does not include a cell subset including more than 1 serving cell, the characteristic proportional value is equal to 0.

In one embodiment, the characteristic proportional value can be equal to 0, when any cell subset included in the first cell set includes only 1 serving cell, the characteristic proportional value is equal to 0.

In one embodiment, the statement in the claims that "the first threshold and the second threshold are both related to a characteristic proportional value" includes the following meaning: both the first threshold and the second threshold change with the characteristic proportional value.

In one embodiment, the statement in the claims that "the first threshold and the second threshold are both related to a characteristic proportional value" includes the following meaning: the characteristic proportional value is used to determine the first threshold and the second threshold.

In one embodiment, the statement in the claims that "the first threshold and the second threshold are both related to a characteristic proportional value" includes the following meaning: a formula for calculating the first threshold and a formula for calculating the second threshold both include the characteristic proportional value as a parameter.

In one embodiment, the statement in the claims that "the first threshold and the second threshold are both related to a characteristic proportional value" includes the following meaning: the characteristic proportional value is used to calculate the first threshold and the second threshold.

In one embodiment, the statement in the claims that "the first threshold and the second threshold are both related to a characteristic proportional value" is implemented by means of Claim 5 in the present application.

In one embodiment, the statement in the claims that "the first threshold and the second threshold are both related to a characteristic proportional value" includes the following meaning: both the first threshold and the second threshold are positively correlated to the characteristic proportional value.

In one embodiment, the statement in the claims that "the first threshold and the second threshold are both related to a characteristic proportional value" includes the following meaning: both the first threshold and the second threshold are proportional to the characteristic proportional value.

In one embodiment, the statement in the claims that "the first threshold and the second threshold are both related to a characteristic proportional value" includes the following meaning: both the first threshold and the second threshold are linearly correlated to the characteristic proportional value.

In one embodiment, the statement in the claims that "the first threshold and the second threshold are both related to a characteristic proportional value" includes the following meaning: the first threshold is equal to a smaller value for comparison between two first-type candidate thresholds, while the second threshold is equal to a smaller value for comparison between two second-type candidate thresholds, at least one of the two first-type candidate thresholds is related to the characteristic proportional value, and at least one of the two second-type candidate thresholds is related to the characteristic proportional value.

In one embodiment, the statement in the claims that "the first threshold and the second threshold are both related to a characteristic proportional value" is implemented by satisfying the following equation:

$$M_{\text{PDCCH}}^{\text{total,slot},\mu} = \left\lfloor N_{\text{cells}}^{\text{cap}} \cdot M_{\text{PDCCH}}^{\text{max,slot},\mu} \cdot \vartheta \right\rfloor$$

$$C_{\text{PDCCH}}^{\text{total,slot},\mu} = \left\lfloor N_{\text{cells}}^{\text{cap}} \cdot C_{\text{PDCCH}}^{\text{max,slot},\mu} \cdot \vartheta \right\rfloor$$

where $M_{\text{PDCCH}}^{\text{total,slot},\mu}$ represents the first threshold, $C_{\text{PDCCH}}^{\text{total,slot},\mu}$ represents the second threshold, $\vartheta$ represents the

characteristic proportional value, $N_{\text{cells}}^{\text{cap}}$ represents the number of serving cells being configured or the number of serving cells of the capability report of the first node, $M_{\text{PDCCH}}^{\text{max,slot},\mu}$ and $C_{\text{PDCCH}}^{\text{max,slot},\mu}$ are pre-defined values related to the subcarrier spacing $\mu$, and the first time window is a slot.

In one embodiment, the statement in the claims that "the first threshold and the second threshold are both related to a characteristic proportional value" includes the following meaning: the first threshold is equal to a smaller value for comparison between $M_{\text{PDCCH}}^{\text{max,slot},\mu}$ and $M_{\text{PDCCH}}^{\text{total,slot},\mu}$, the second threshold is equal to a smaller value for comparison between $C_{\text{PDCCH}}^{\text{max,slot},\mu}$ and $C_{\text{PDCCH}}^{\text{total,slot},\mu}$, where $M_{\text{PDCCH}}^{\text{max,slot},\mu}$ and $C_{\text{PDCCH}}^{\text{max,slot},\mu}$ are both pre-defined values related to the subcarrier spacing $\mu$. $M_{\text{PDCCH}}^{\text{total,slot},\mu}$ and $C_{\text{PDCCH}}^{\text{total,slot},\mu}$ are equal to $\left\lfloor N_{\text{cells}}^{\text{cap}} \cdot M_{\text{PDCCH}}^{\text{max,slot},\mu} \cdot \vartheta \right\rfloor$ and $\left\lfloor N_{\text{cells}}^{\text{cap}} \cdot C_{\text{PDCCH}}^{\text{max,slot},\mu} \cdot \vartheta \right\rfloor$, respectively, where $\vartheta$ stands for the characteristic proportional value, $N_{\text{cells}}^{\text{cap}}$ represents the number of serving cells being configured or the number of serving cells of the capability report of the first node, and the first time window is a slot.

In one embodiment, the statement in the claims that "the first threshold and the second threshold are both related to a characteristic proportional value" includes the following meaning: the first threshold is equal to a smaller value for comparison between $\gamma \cdot M_{\text{PDCCH}}^{\text{max,slot},\mu}$ and $M_{\text{PDCCH}}^{\text{total,slot},\mu}$, the second threshold is equal to a smaller value for comparison between $\gamma \cdot C_{\text{PDCCH}}^{\text{max,slot},\mu}$ and $C_{\text{PDCCH}}^{\text{total,slot},\mu}$, where $M_{\text{PDCCH}}^{\text{max,slot},\mu}$ and $C_{\text{PDCCH}}^{\text{max,slot},\mu}$ are both pre-defined values related to the subcarrier spacing $\mu$; $M_{\text{PDCCH}}^{\text{total,slot},\mu}$ and $C_{\text{PDCCH}}^{\text{total,slot},\mu}$ are equal to $\left\lfloor N_{\text{cells}}^{\text{cap}} \cdot M_{\text{PDCCH}}^{\text{max,slot},\mu} \cdot \vartheta \right\rfloor$ and $\left\lfloor N_{\text{cells}}^{\text{cap}} \cdot C_{\text{PDCCH}}^{\text{max,slot},\mu} \cdot \vartheta \right\rfloor$, respectively, where $\vartheta$ stands for the characteristic proportional value, $N_{\text{cells}}^{\text{cap}}$ represents the number of serving cells being configured or the number of serving cells of the capability report of the first node, $\gamma$ is a default factor or a factor of the capability report of the first node, and the first time window is a slot.

In one embodiment, the statement in the claims that "the first threshold and the second threshold are both related to a characteristic proportional value" is implemented by satisfying the following equation:

$$M_{\text{PDCCH}}^{\text{total},(X,Y),\mu} = \left\lfloor N_{\text{cells}}^{\text{cap-r16}} \cdot M_{\text{PDCCH}}^{\text{max},(X,Y),\mu} \cdot \vartheta \right\rfloor$$

$$C_{\text{PDCCH}}^{\text{total},(X,Y),\mu} = \left\lfloor N_{\text{cells}}^{\text{cap-r16}} \cdot C_{\text{PDCCH}}^{\text{max},(X,Y),\mu} \cdot \vartheta \right\rfloor$$

where $M_{\text{PDCCH}}^{\text{total},(X,Y),\mu}$ represents the first threshold, $C_{\text{PDCCH}}^{\text{total},(X,Y),\mu}$ represents the second threshold, $\vartheta$ represents the characteristic proportional value, $N_{\text{cells}}^{\text{cap-r16}}$ represents the number of serving cells being configured or the number of serving cells of the capability report of the first node, $M_{\text{PDCCH}}^{\text{max},(X,Y),\mu}$ and $C_{\text{PDCCH}}^{\text{max},(X,Y),\mu}$ are pre-defined values related to the subcarrier spacing $\mu$, and the first time window comprises X time-domain consecutive multicarrier symbols.

In one embodiment, the statement in the claims that "the first threshold and the second threshold are both related to a characteristic proportional value" includes the following meaning: the first threshold is equal to a smaller value for comparison between $M_{\text{PDCCH}}^{\text{max},(X,Y),\mu}$ and $M_{\text{PDCCH}}^{\text{total},(X,Y),\mu}$, the second threshold is equal to a smaller value for comparison between $C_{\text{PDCCH}}^{\text{max},(X,Y),\mu}$ and $C_{\text{PDCCH}}^{\text{total},(X,Y),\mu}$, where $M_{\text{PDCCH}}^{\text{max},(X,Y),\mu}$ and $C_{\text{PDCCH}}^{\text{max},(X,Y),\mu}$ are both pre-defined values related to the subcarrier spacing $\mu$. $M_{\text{PDCCH}}^{\text{total},(X,Y),\mu}$ and $C_{\text{PDCCH}}^{\text{total},(X,Y),\mu}$ are equal to $\left\lfloor N_{\text{cells}}^{\text{cap-r16}} \cdot M_{\text{PDCCH}}^{\text{max},(X,Y),\mu} \cdot \vartheta \right\rfloor$ and $\left\lfloor N_{\text{cells}}^{\text{cap-r16}} \cdot C_{\text{PDCCH}}^{\text{max},(X,Y),\mu} \cdot \vartheta \right\rfloor$ respectively, where $\vartheta$ stands for the characteristic proportional value, $N_{\text{cells}}^{\text{cap-r16}}$ represents the number of serving cells being configured or the number of serving cells of the capability report of the first node, and the first time window comprises X time-domain consecutive multicarrier symbols.

In one embodiment, a number of serving cell(s) counted for at least one cell subset included in the first cell set is a number of serving cell(s) equivalent to at least one cell subset included in the first cell set.

In one embodiment, a number of serving cell(s) counted for at least one cell subset included in the first cell set is a number of virtual serving cell(s) corresponding to at least one cell subset included in the first cell set.

In one embodiment, a number of serving cell(s) counted for at least one cell subset included in the first cell set is a sum of the numbers of serving cells counted for all cell subsets included in the first cell set.

In one embodiment, a number of serving cell(s) counted for at least one cell subset included in the first cell set is a sum of the numbers of serving cells counted for all cell subsets included in the first cell set, with scheduling cells using the first subcarrier spacing.

In one embodiment, a number of serving cell(s) counted for at least one cell subset included in the first cell set is a sum of the numbers of serving cells counted for all cell subsets included in the first cell set, with active BWPs of scheduling cells using the first subcarrier spacing.

In one embodiment, a number of serving cell(s) counted for at least one cell subset included in the first cell set is a sum of the numbers of serving cells counted for all cell subsets included in the first cell set that are scheduled by scheduling cells using the first subcarrier spacing.

In one embodiment, a number of serving cell(s) counted for at least one cell subset included in the first cell set is a sum of the numbers of serving cells counted for all cell subsets included in the first cell set that are scheduled by scheduling cells with active BWPs using the first subcarrier spacing.

In one embodiment, a number of serving cell(s) counted for at least one cell subset included in the first cell set is the weight occupied by this cell subset in the calculation of the first threshold and the second threshold.

In one embodiment, a number of serving cell(s) counted for at least one cell subset included in the first cell set is a parameter value representing this cell subset in the calculation of the first threshold and the second threshold.

In one embodiment, the first cell set includes M1 cell subset(s), and M1 quantity value(s) is(are) the number(s) of serving cells respectively counted for the M1 cell subset(s), "a number of serving cell(s) counted for at least one cell subset included in the first cell set" is a sum of the M1 quantity value(s), any one of the M1 quantity value(s) is not less than 0, and one of the M1 quantity value(s) may either be an integer or a non-integer, M1 being a positive integer.

In one embodiment, the first cell set includes M1 cell subset(s), and M1 quantity value(s) is(are) the number(s) of serving cells respectively counted for the M1 cell subset(s), "a number of serving cell(s) counted for at least one cell subset included in the first cell set" is equal to a sum of M2 quantity value(s) of the M1 quantity value(s), any one of the M1 quantity value(s) is not less than 0, and one of the M1 quantity value(s) may either be an integer or a non-integer, M1 being a positive integer and M2 being a positive integer no greater than the M1.

In one embodiment, the first cell set includes M1 cell subset(s), and M1 quantity value(s) is(are) the number(s) of serving cells respectively counted for the M1 cell subset(s), "a number of serving cell(s) counted for at least one cell subset included in the first cell set" is a sum of the M1 quantity value(s); any one of the M1 quantity value(s) is not less than 0, and one of the M1 quantity value(s) may either be an integer or a non-integer, M1 being a positive integer; any serving cell included in any one of the M1 cell subset(s) is scheduled by a scheduling cell using the first subcarrier spacing.

In one embodiment, the first cell set includes M1 cell subset(s), and M1 quantity value(s) is(are) the number(s) of serving cells respectively counted for the M1 cell subset(s), "a number of serving cell(s) counted for at least one cell subset included in the first cell set" is a sum of the M1 quantity value(s); any one of the M1 quantity value(s) is not less than 0, and one of the M1 quantity value(s) may either be an integer or a non-integer, M1 being a positive integer; an active BWP on the scheduling cell of any serving cell included in any one of the M1 cell subset(s) uses the first subcarrier spacing.

In one embodiment, the first cell set includes M1 cell subset(s), and M1 quantity value(s) is(are) the number(s) of serving cells respectively counted for the M1 cell subset(s), "a number of serving cell(s) counted for at least one cell subset included in the first cell set" is equal to a sum of M2 quantity value(s) of the M1 quantity value(s); any one of the M1 quantity value(s) is not less than 0, and one of the M1 quantity value(s) may either be an integer or a non-integer, M1 being a positive integer and M2 being a positive integer no greater than the M1; any serving cell included in any one of the M1 cell subset(s) is scheduled by a scheduling cell using the first subcarrier spacing.

In one embodiment, the first cell set includes M1 cell subset(s), and M1 quantity value(s) is(are) the number(s) of serving cells respectively counted for the M1 cell subset(s), "a number of serving cell(s) counted for at least one cell subset included in the first cell set" is equal to a sum of M2 quantity value(s) of the M1 quantity value(s); any one of the M1 quantity value(s) is not less than 0, and one of the M1 quantity value(s) may either be an integer or a non-integer, M1 being a positive integer and M2 being a positive integer no greater than the M1; an active BWP on the scheduling cell of any serving cell included in any one of the M1 cell subset(s) uses the first subcarrier spacing.

In one embodiment, a number of serving cell(s) counted for at least one cell subset included in the first cell set is a number of serving cell(s) counted for a cell subset included in the first cell set.

In one embodiment, a number of serving cell(s) counted for at least one cell subset included in the first cell set is a number of serving cells counted in total for multiple cell subsets included in the first cell set.

In one embodiment, a number of serving cell(s) counted for at least one cell subset included in the first cell set is a number of serving cells counted in total for multiple cell subsets included in the first cell set, and an active BWP on the scheduling cell of any serving cell in the multiple cell subsets uses the first subcarrier spacing.

In one embodiment, a cell subset included in the first cell set is counted as only one serving cell.

In one embodiment, all serving cells in a cell subset included in the first cell set are virtualized as one serving cell.

In one embodiment, the number of serving cell(s) counted for a cell subset included in the first cell set is equal to 1.

In one embodiment, the number of serving cell(s) counted for any cell subset included in the first cell set is equal to 1.

In one embodiment, the number of serving cell(s) counted for a cell subset included in the first cell set is equal to N1, where N1 may be either an integer or a non-integer and the N1 is not less than 0.

In one embodiment, the number of serving cell(s) counted for a cell subset included in the first cell set is predefined or configured.

In one embodiment, a default value of the number of serving cell(s) counted for a cell subset included in the first cell set (or when the configuration signaling is default) is equal to an actual number of serving cells included in the cell subset.

In one embodiment, a default value of the number of serving cell(s) counted for a cell subset included in the first cell set (or when the configuration signaling is default) is equal to 1.

In one embodiment, all serving cells in a cell subset included in the first cell set are virtualized (or deemed equivalently) as one serving cell.

In one embodiment, all serving cells included in a cell subset included in the first cell set are virtualized (or deemed equivalently) as N1 serving cell(s), where N1 may be either an integer or a non-integer and the N1 is not less than 0.

In one embodiment, the statement in the claims that "a number of serving cell(s) counted for at least one cell subset included in the first cell set is used to determine the characteristic proportional value" includes the following meaning: the number of serving cell(s) counted for at least one cell subset included in the first cell set is used by the first node in the present application to determine the characteristic proportional value.

In one embodiment, the statement in the claims that "a number of serving cell(s) counted for at least one cell subset included in the first cell set is used to determine the characteristic proportional value" and the statement that "a number of serving cell(s) counted for at least one cell subset included in the first cell set is used to calculate the characteristic proportional value" are equivalent or may be used interchangeably.

In one embodiment, the statement in the claims that "a number of serving cell(s) counted for at least one cell subset included in the first cell set is used to determine the characteristic proportional value" and the statement that "the characteristic proportional value is related to a number of serving cell(s) counted for at least one cell subset included in the first cell set" are equivalent or may be used interchangeably.

In one embodiment, the statement in the claims that "a number of serving cell(s) counted for at least one cell subset included in the first cell set is used to determine the characteristic proportional value" includes the following meaning: a ratio of the number of serving cell(s) counted for at least one cell subset included in the first cell set to a basic number is used to determine the characteristic proportional value, the basic number being related to the number of serving cells included in the first cell set.

In one embodiment, the statement in the claims that "a number of serving cell(s) counted for at least one cell subset included in the first cell set is used to determine the characteristic proportional value" includes the following meaning: a ratio of the number of serving cell(s) counted for at least one cell subset included in the first cell set to a basic number is used to determine the characteristic proportional value, the basic number being related to a sum of the numbers of serving cells counted for all cell subsets included in the first cell set.

In one embodiment, the statement in the claims that "a number of serving cell(s) counted for at least one cell subset included in the first cell set is used to determine the characteristic proportional value" includes the following meaning: a ratio of a sum of the numbers of serving cells counted for all cell subsets included in the first cell set that are scheduled by scheduling cells using the first subcarrier spacing to a basic number is used to determine the characteristic proportional value, the basic number being related to a sum of the numbers of serving cells counted for all cell subsets included in the first cell set.

In one embodiment, the statement in the claims that "a number of serving cell(s) counted for at least one cell subset included in the first cell set is used to determine the characteristic proportional value" includes the following meaning: the characteristic proportional value is equal to a ratio of a sum of the numbers of serving cells counted for all cell subsets included in the first cell set that are scheduled by scheduling cells using the first subcarrier spacing to a basic number, the basic number being equal to a sum of the numbers of serving cells counted for all cell subsets included in the first cell set.

In one embodiment, the statement in the claims that "a number of serving cell(s) counted for at least one cell subset included in the first cell set is used to determine the characteristic proportional value" is implemented by means of Claim 2 in the present application.

In one embodiment, the statement in the claims that "a number of serving cell(s) counted for at least one cell subset included in the first cell set is used to determine the characteristic proportional value" is implemented by means of Claim 3 in the present application.

In one embodiment, the statement in the claims that "a number of serving cell(s) counted for at least one cell subset included in the first cell set is used to determine the characteristic proportional value" includes the following meaning: the first cell set includes M1 cell subset(s), and M1 quantity value(s) is(are) the number(s) of serving cells respectively counted for the M1 cell subset(s), "a number of serving cell(s) counted for at least one cell subset included in the first cell set" is equal to a sum of M2 quantity value(s) of the M1 quantity value(s); any one of the M1 quantity value(s) is not less than 0, and one of the M1 quantity value(s) may either be an integer or a non-integer, M1 being a positive integer and M2 being a positive integer no greater than the M1; any serving cell included in any one of the M1 cell subset(s) is scheduled by a scheduling cell using the first subcarrier spacing; the characteristic proportional value is equal to a ratio between a sum of the M2 quantity value(s) and a sum of the M1 quantity value(s).

In one embodiment, the statement in the claims that "a number of serving cell(s) counted for at least one cell subset included in the first cell set is used to determine the characteristic proportional value" includes the following meaning: the first cell set includes M1 cell subset(s), and M1 quantity value(s) is(are) the number(s) of serving cells respectively counted for the M1 cell subset(s), "a number of serving cell(s) counted for at least one cell subset included in the first cell set" is equal to a sum of M2 quantity value(s) of the M1 quantity value(s); any one of the M1 quantity value(s) is not less than 0, and one of the M1 quantity value(s) may either be an integer or a non-integer, M1 being a positive integer and M2 being a positive integer no greater than the M1; an active BWP on the scheduling cell of any serving cell included in any one of the M2 cell subset(s) uses the first subcarrier spacing; the characteristic proportional value is equal to a ratio between a sum of the M2 quantity value(s) and a sum of the M1 quantity value(s).

### Embodiment 2

Embodiment 2 illustrates a schematic diagram of a network architecture according to the present application, as shown in FIG. 2. FIG. 2 is a diagram illustrating a network architecture 200 of 5G NR, Long-Term Evolution (LTE) and Long-Term Evolution Advanced (LTE-A) systems. The 5G NR or LTE network architecture 200 may be called a 5G System/ Evolved Packet System (5GS/EPS) 200 or other suitable terminology. The 5GS/EPS 200 may comprise one or more UEs 201, an NG-RAN 202, a 5G-Core Network/Evolved Packet Core (5GC/EPC) 210, a Home Subscriber Server/ Unified Data Management(HSS/UDM) 220 and an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will find it easy to understand that various concepts presented throughout the present application can be extended to networks providing circuit switching services or other cellular networks. The NG-RAN 202 comprises an NR/evolved node B (gNB/eNB) 203 and other gNB(eNB) 204. The gNB(eNB) 203 provides UE 201 oriented user plane and control plane terminations. The gNB(eNB)203 can be connected to other gNB(eNB) 204 via an Xn/X2 interface (like backhaul). The gNB(eNB)203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB(eNB)203 provides an access point of the 5GC/EPC 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB(eNB)203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/AMFs/SMFs 214, a Service Gateway (S-GW)/User Plane Function (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212. The S-GW/UPF 212 is connected to the P-GW/UPF 213. The P-GW 213 provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application.

In one embodiment, the gNB(eNB) 203 corresponds to the second node in the present application.

**Embodiment 3**

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 used for a first node (UE or gNB) and a second node (gNB or UE) is represented by three layers, which are layer 1, layer 2 and layer 3. The layer 1 (L1) is the lowest layer which performs signal processing functions of various PHY layers. The L1 is called PHY 301 in the present application. The layer 2 (L2) 305 is above the PHY 301, and is in charge of the link between a first node and a second node via the PHY 301. The L2 305 comprises a Medium Access Control (MAC) sublayer 302, a Radio Link Control (RLC) sublayer 303 and a Packet Data Convergence Protocol (PDCP) sublayer 304. All these sublayers terminate at the second nodes. The PDCP sublayer 304 provides multiplexing among variable radio bearers and logical channels. The PDCP sublayer 304 provides security by encrypting packets and also support for inter-cell handover of the first node between second nodes. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating between first nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second node and the first node. The radio protocol architecture in the user plane 350 comprises the L1 layer and the L2 layer. In the user plane 350, the radio protocol architecture used for the first node and the second node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first node may comprise several higher layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first information block in the present application is generated by the RRC306, or the MAC302, or the MAC352, or by the PHY301, or the PHY351.

In one embodiment, the second information block in the present application is generated by the RRC306, or the MAC302, or the MAC352, or by the PHY301, or the PHY351.

In one embodiment, the third information block in the present application is generated by the RRC306, or the MAC302, or the MAC352, or by the PHY301, or the PHY351.

**Embodiment 4**

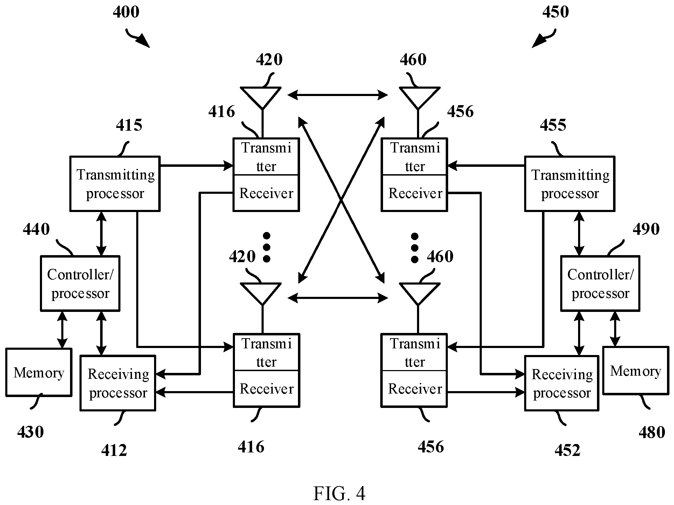

Embodiment 4 illustrates a schematic diagram of a first node and a second node according to one embodiment of the present application, as shown in FIG. 4.

The first node (450) can comprise a controller/processor 490, a data source/buffer 480, a receiving processor 452, a transmitter/receiver 456 and a transmitting processor 455, where the transmitter/receiver 456 comprises an antenna 460.

The second node (410) can comprise a controller/processor 440, a data source/buffer 430, a receiving processor 412, a transmitter/receiver 416 and a transmitting processor 415, where the transmitter/receiver 416 comprises an antenna 420.

In Downlink (DL), a higher layer packet, for instance higher-layer information contained in the first information block and the second information block in the present application is provided to the controller/processor 440. The controller/processor 440 provides functions of the L2 layer and above. In DL, the controller/processor 440 provides header compression, encryption, packet segmentation and reordering, multiplexing between a logical channel and a transport channel as well as radio resources allocation for the first node 450 based on various priorities. The controller/processor 440 is also responsible for HARQ operation, a retransmission of a lost packet and a signaling to the first node 450, for instance, higher-layer information contained in the first information block and the second information block is generated in the controller/processor 440. The transmitting processor 415 performs various signal processing functions used for the L1 (that is, PHY), including coding, interleaving, scrambling, modulating, power control/allocating, pre-coding and physical layer control signaling generation, for example, the generations of a physical-layer signal of the first information block and the second information block in the present application and a physical-layer signal corresponding to the PDCCH candidates in the present application are completed in the transmitting processor 415. Modulation symbols that have been generated are divided into parallel streams and each of them is mapped onto a corresponding multicarrier subcarrier and/or multicarrier symbol, and then is mapped by the transmitting processor 415 to the antenna 420 via the transmitter 416 to be transmitted in the form of radio frequency signals. At the receiving end, each receiver 456 receives a radio frequency signal via a corresponding antenna 460, and recovers baseband information modulated onto a radio frequency carrier and provides the baseband information to the receiving processor 452. The receiving processor 452 performs various signal receiving processing functions used for the L1. Signal receiving processing functions include monitoring of a physical layer signal of the first information block and the second information block in the present application and PDCCH candidates, demodulating multicarrier symbols in multicarrier symbol streams based on various modulation schemes (i.e., BPSK, QPSK), then de-scrambling, decoding and de-interleaving to recover data or control signal transmitted by the second node 410 on a physical channel, and providing the data and control signal to the controller/processor 490. The controller/processor 490 is in charge of the L2 and above layers, the controller/processor 490 interprets higher-layer information comprised in the first information block and the second information block in the present application. The controller/processor can be associated with the memory 480 that stores program code and data; the memory 480 may be called a computer readable medium.

In UL transmission, which is similar to DL, higher-layer information, including that contained in the third information block in the present application, upon generation in the controller/processor 490, is through the transmitting processor 455 to perform signal transmitting processing functions used for the L1 (that is, PHY), for instance, generation of physical layer signals carrying the third information block is completed in the transmitting processor 455, and are then mapped to the antenna 460 via the transmitter 456 from the transmitting processor 455 and transmitted in the form of radio frequency signals. The receiver 416 receives a radio frequency signal via a corresponding antenna 420, and each receiver 416 recovers baseband information modulated onto a radio frequency carrier and provides the baseband information to the receiving processor 412. The receiving processor 412 performs various signal reception processing functions used for L1 (i.e., PHY), including receiving a physical layer signal carrying the third information block and then providing data and/or control signal to the controller/processor 440. Functions of the L2 performed by the controller/processor 440 include interpreting higher-layer information, including interpreting higher-layer information carried in the third information block. The controller/processor can be associated with the buffer 430 that stores program code and data; the buffer 430 may be called a computer readable medium.

In one embodiment, the first node 450 comprises at least one processor and at least one memory. The at least one memory comprises computer program codes; the at least one memory and the computer program codes are configured to be used in collaboration with the at least one processor. The first node 450 at least receives a first information block, the first information block being used to determine a first cell set, the first cell set including multiple serving cells; and monitors at least 1 PDCCH candidate in a first time window in step 102, the first time window including at least 1 multicarrier symbol consecutive in time domain; herein, a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0.

In one embodiment, the first node 450 comprises a memory that stores a computer readable instruction program. The computer readable instruction program generates actions when executed by at least one processor. The actions include: receiving a first information block, the first information block being used to determine a first cell set, the first cell set including multiple serving cells; and monitoring at least 1 PDCCH candidate in a first time window in step 102, the first time window including at least 1 multicarrier symbol consecutive in time domain; herein, a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0.

In one embodiment, the second node 410 comprises at least one processor and at least one memory. The at least one memory comprises computer program codes; the at least one memory and the computer program codes are configured to be used in collaboration with the at least one processor. The second node 410 at least transmits a first information block, the first information block being used to determine a first cell set, the first cell set including multiple serving cells; and determines at least 1 PDCCH candidate in a first time window, the first time window including at least 1 multicarrier symbol consecutive in time domain; herein, a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0.

In one embodiment, the second node 410 comprises a memory that stores a computer readable instruction program. The computer readable instruction program generates actions when executed by at least one processor. The actions include: transmitting a first information block, the first information block being used to determine a first cell set, the first cell set including multiple serving cells; and determining at least 1 PDCCH candidate in a first time window in step 102, the first time window including at least 1 multicarrier symbol consecutive in time domain; herein, a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0.

In one embodiment, the first node 450 is a UE.

In one embodiment, the second node 410 is a base station (gNB/eNB).

In one embodiment, the receiver 456 (comprising the antenna 460), the receiving processor 452 and the controller/processor 490 are used for receiving the first information block in the present application.

In one embodiment, the receiver 456 (comprising the antenna 460), the receiving processor 452 and the controller/processor 490 are used for receiving the second information block in the present application.

In one embodiment, the receiver 456 (comprising the antenna 460), the receiving processor 452 and the controller/processor 490 are used for monitoring at least one PDCCH candidate in the first time window in the present application.

In one embodiment, the transmitter 456 (comprising the antenna 460), the transmitting processor 455 and the controller/processor 490 are used for transmitting the third information block in the present application.

In one embodiment, the transmitter 416 (comprising the antenna 420), the transmitting processor 415 and the controller/processor 440 are used for transmitting the first information block in the present application.

In one embodiment, the transmitter 416 (comprising the antenna 420), the transmitting processor 415 and the controller/processor 440 are used for transmitting the second information block in the present application.

In one embodiment, the transmitter 416 (comprising the antenna 420), the transmitting processor 415 and the controller/processor 440 are used for determining at least one PDCCH candidate in the first time window in the present application.

In one embodiment, the receiver 416 (comprising the antenna 420), the receiving processor 412 and the controller/processor 440 are used for receiving the third information block in the present application.

## Embodiment 5

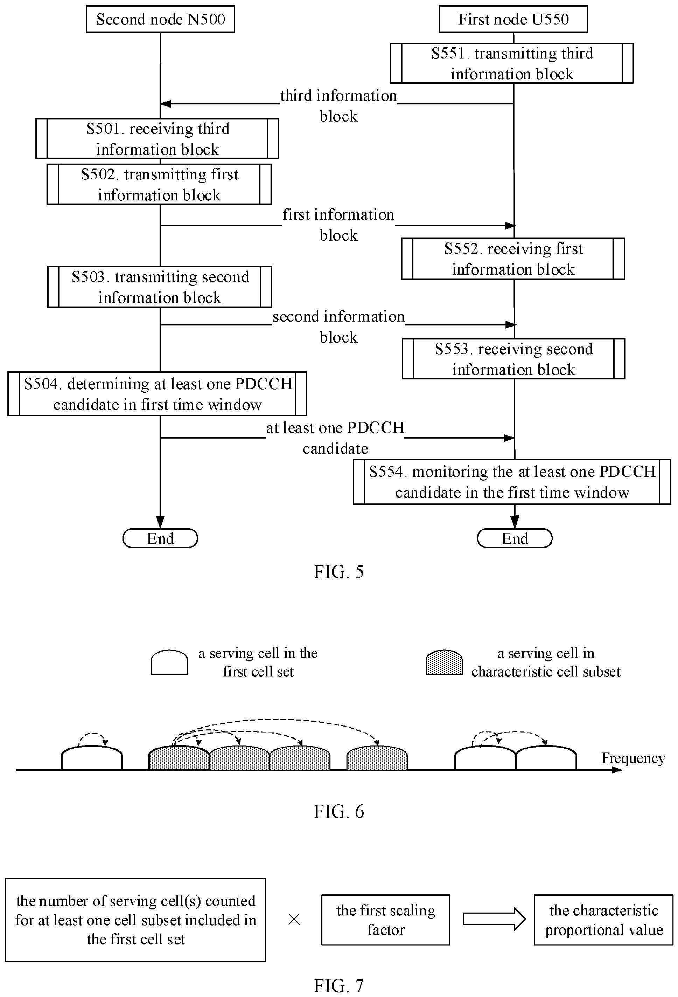

Embodiment 5 illustrates a flowchart of radio signal transmission according to one embodiment of the present application, as shown in FIG. 5. In FIG. 5, a second node N500 is a maintenance base station for a serving cell for a first node U550. It should be particularly noted that the sequence illustrated herein does not set any limit to the signal transmission order or implementation order in the present application.

The **second node N500** receives a third information block in step S501, transmits a first information block in step S502, transmits a second information block in step S503, and determines at least one PDCCH candidate in a first time window in step S504.

The **first node U550** transmits the third information block in step S551, receives the first information block in step S552, receives the second information block in step S553, and monitors the at least one PDCCH candidate in the first time window in step S554.

In Embodiment 5, the first information block is used to determine a first cell set, the first cell set including multiple serving cells; the first time window includes at least 1 multicarrier symbol consecutive in time domain; a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0; the second information block is used to determine a first scaling factor; the third information block is used to indicate a first quantity value, the first quantity value being a positive integer.

In one embodiment, the second information block is transmitted via an air interface or a wireless interface.

In one embodiment, the second information block comprises all or part of a higher layer signaling or a physical layer signaling.

In one embodiment, the second information block comprises all or partial Information Elements (IEs) in a Radio Resource Control (RRC) signaling.

In one embodiment, the second information block comprises all or part of fields in one Information Element (IE) in a Radio Resource Control (RRC) signaling.

In one embodiment, the second information block comprises all or part of a Medium Access Control (MAC) layer signaling.

In one embodiment, the second information block is transmitted through a Physical Downlink Shared Channel (PDSCH).

In one embodiment, the second information block is before the first information block.

In one embodiment, the second information block is after the first information block.

In one embodiment, the second information block and the first information block are transmitted through a same physical channel.

In one embodiment, the second information block is UE-specific.

In one embodiment, the second information block is cell group specific.

In one embodiment, the second information block is configured per cell subset included in the first cell set.

In one embodiment, the second information block comprises all or part of fields in an IE "Physical Cell GroupConfig".

In one embodiment, the first information block and the second information block belong to a same IE.

In one embodiment, the first information block and the second information block respectively belong to different IEs.

In one embodiment, the first information block and the second information block belong to two different fields in a same IE.

In one embodiment, the first information block and the second information block respectively belong to two different signalings.

In one embodiment, the first information block and the second information block belong to two different sub-fields in a same field.

In one embodiment, the second information block and an information block used to indicate multiple serving cells scheduled by a same DCI format belong to a same IE.

In one embodiment, the second information block and an information block used to indicate multiple serving cells scheduled by a same DCI format are two different fields in a same IE.

In one embodiment, the second information block and an information block used to indicate multiple serving cells scheduled by a same DCI format respectively belong to two different IEs.

In one embodiment, the statement in the claims that "the second information block is used to determine a first scaling factor" includes the following meaning: the second information block is used by the first node in the present application to determine the first scaling factor.

In one embodiment, the statement in the claims that "the second information block is used to determine a first scaling factor" includes the following meaning: part or all of the second information block is used to explicitly or implicitly indicate the first scaling factor.

In one embodiment, the statement in the claims that "the second information block is used to determine a first scaling factor" includes the following meaning: part or all of the second information block is used to explicitly or implicitly indicate a candidate value that the first scaling factor is equal to out of multiple candidate values.

In one embodiment, the statement in the claims that "the second information block is used to determine a first scaling factor" includes the following meaning: part or all of the second information block is used to indicate an index value corresponding to the first scaling factor.

In one embodiment, the statement in the claims that "the second information block is used to determine a first scaling factor" includes the following meaning: a capability report of the first node indicates a scaling factor value, and part or all of the second information block is used to indicate whether the first scaling factor is equal to the scaling factor value indicated by the capability report of the first node.

In one embodiment, the third information block is transmitted via an air interface or a wireless interface.

In one embodiment, the third information block comprises all or part of a higher layer signaling or a physical layer signaling.

In one embodiment, the third information block is earlier than the first information block.

In one embodiment, the third information block is later than the first information block.

In one embodiment, the third information block comprises all or part of a Radio Resource Control (RRC) signaling.

In one embodiment, the third information block comprises all or part of a Medium Access Control (MAC) layer signaling.

In one embodiment, the third information block is transmitted through an Uplink Shared Channel (UL-SCH).

In one embodiment, the third information block is transmitted through a Physical Uplink Shared Channel (PUSCH).

In one embodiment, the third information block is transmitted through a Physical Uplink Control Channel (PUCCH).

In one embodiment, the third information block comprises Uplink Control Information (UCI).

In one embodiment, the third information block is used to indicate capabilities of the first node in the present application.

In one embodiment, the third information block is used to indicate the capability of blind detection (BD) of the first node in the present application.

In one embodiment, the statement in the claims that "the third information block is used to indicate a first quantity value" includes the following meaning: the third information block is used by the first node in the present application to indicate the first quantity value.

In one embodiment, the statement in the claims that "the third information block is used to indicate a first quantity value" includes the following meaning: all or part of the third information block is used to explicitly or implicitly indicate the first quantity value.

In one embodiment, the third information block comprises a field "pdcch-MonitoringCA".

In one embodiment, the third information block comprises a field "pdcch-BlindDetectionCA".

In one embodiment, the third information block comprises an IE "Phy-ParametersFRX-Diff"

In one embodiment, the third information block comprises a field "pdcch-BlindDetectionCA1-r16".

In one embodiment, the third information block comprises a field "pdcch-BlindDetectionCA2-r16".

In one embodiment, the third information block comprises an IE "UE-NR-Capability".

## Embodiment 6

Embodiment 6 illustrates a schematic diagram of a characteristic cell subset according to one embodiment of the present application, as shown in FIG. 6. In FIG. 6, the horizontal axis represents frequency; each arc-top region represents a serving cell in the first cell set, each dot-filled arc-top region represents a serving cell in a characteristic cell subset, and the dotted lines with arrow represent the relationship of scheduling and being scheduled between serving cells.

In Embodiment 6, a characteristic cell subset is a cell subset included in the first cell set in the present application, and the characteristic cell subset includes multiple serving cells; a number of serving cell(s) being counted for the characteristic cell subset is unequal to the number of serving cells included in the characteristic cell subset.

In one embodiment, any serving cell included in the characteristic cell subset belongs to the first cell set.

In one embodiment, any serving cell included in the characteristic cell subset is a serving cell in the first cell set.

In one embodiment, the characteristic cell subset is any cell subset included in the first cell set that includes multiple serving cells.

In one embodiment, the characteristic cell subset is a given cell subset included in the first cell set that includes multiple serving cells.

In one embodiment, a number of serving cells included in the characteristic cell subset is not less than 4.

In one embodiment, a number of serving cells included in the characteristic cell subset is not less than 8.

In one embodiment, a number of serving cells included in the characteristic cell subset is not greater than 4.

In one embodiment, a number of serving cells included in the characteristic cell subset is not greater than 8.

In one embodiment, a number of serving cells included in the characteristic cell subset is not greater than 16.

In one embodiment, a number of serving cells included in the characteristic cell subset that can be simultaneously scheduled for downlink transmission is not greater than 16.

In one embodiment, a number of serving cells included in the characteristic cell subset that can be simultaneously scheduled for downlink transmission is not greater than 8.

In one embodiment, a number of serving cells included in the characteristic cell subset that can be simultaneously scheduled for uplink transmission is not greater than 16.

In one embodiment, a number of serving cells included in the characteristic cell subset that can be simultaneously scheduled for uplink transmission is not greater than 8.

In one embodiment, a number of serving cells included in the characteristic cell subset that can be simultaneously scheduled for uplink transmission is not greater than 4.

In one embodiment, an upper limit of a number of serving cells included in the characteristic cell subset that can be simultaneously scheduled for uplink transmission is related to a capability indicated by the first node.

In one embodiment, an upper limit of a number of serving cells included in the characteristic cell subset that can be simultaneously scheduled for downlink transmission is related to a capability indicated by the first node.

In one embodiment, a number of serving cells included in the characteristic cell subset that can be simultaneously scheduled for downlink is equal to a number of serving cells included in the characteristic cell subset that can be simultaneously scheduled for uplink.

In one embodiment, a number of serving cells included in the characteristic cell subset that can be simultaneously scheduled for downlink is unequal to a number of serving cells included in the characteristic cell subset that can be simultaneously scheduled for uplink.

In one embodiment, a number of serving cell(s) being counted for the characteristic cell subset is greater than the number of serving cell(s) included in the characteristic cell subset.

In one embodiment, a number of serving cell(s) being counted for the characteristic cell subset is less than the number of serving cells included in the characteristic cell subset.

In one embodiment, a number of serving cell(s) being counted for the characteristic cell subset is a number of serving cell(s) equivalent to the characteristic cell subset.

In one embodiment, a number of serving cell(s) being counted for the characteristic cell subset is a number of virtual serving cell(s) corresponding to the characteristic cell subset.

In one embodiment, a number of serving cell(s) being counted for the characteristic cell subset is the weight occupied by all serving cells together included in the characteristic cell subset in the calculation of the first threshold and the second threshold.

In one embodiment, a number of serving cell(s) being counted for the characteristic cell subset is a parameter value representing this cell subset in the calculation of the first threshold and the second threshold.

## Embodiment 7

Embodiment 7 illustrates a schematic diagram of a first scaling factor according to one embodiment of the present application, as shown in FIG. 7. In FIG. 7 of the accompanying drawings, three boxes represent the number of serving cell(s) counted for at least one cell subset included in the first cell set, the first scaling factor, and the characteristic proportional value, respectively.

In Embodiment 7, the second information block in the present application is used to determine a first scaling factor, the first scaling factor being no less than 0; a product of the number of serving cell(s) counted for at least one cell subset included in the first cell set of this application and the first scaling factor is used to determine the characteristic proportional value in the present application.

In one embodiment, a capability report of the first node is used to indicate a first scaling factor, the first scaling factor being no less than 0; a product of the number of serving cell(s) counted for at least one cell subset included in the first cell set and the first scaling factor is used to determine the characteristic proportional value.

In one embodiment, a capability report of the first node is used to indicate a scaling factor value, the scaling factor value indicated by the capability report of the first node being no less than 0; a product of the number of serving cell(s) counted for at least one cell subset included in the first cell set and the scaling factor value indicated by the capability report of the first node is used to determine the characteristic proportional value.

In one embodiment, the first scaling factor is UE-specific.

In one embodiment, the first scaling factor is cell group specific.

In one embodiment, the first scaling factor is configured per cell subset.

In one embodiment, the first scaling factor is greater than 0.

In one embodiment, the first scaling factor is less than 1.

In one embodiment, the first scaling factor is greater than 1.

In one embodiment, the first scaling factor may be equal to 0.

In one embodiment, the first scaling factor may be equal to 1.

In one embodiment, a cell subset comprising only 1 serving cell included in the first cell set has a scaling factor equal to 1.

In one embodiment, the first scaling factor has a value equal to 1 by default or when not provided with the second information block.

In one embodiment, the first scaling factor is no greater than 16.

In one embodiment, the first scaling factor is an integer.

In one embodiment, the first scaling factor may be a non-integer.

In one embodiment, the statement in the claims that "a product of the number of serving cell(s) counted for at least one cell subset included in the first cell set and the first scaling factor is used to determine the characteristic proportional value" includes the following meaning: the product of the number of serving cell(s) counted for at least one cell subset included in the first cell set and the first scaling factor is used by the first node or the second node in the present application to determine the characteristic proportional value.

In one embodiment, the statement in the claims that "a product of the number of serving cell(s) counted for at least one cell subset included in the first cell set and the first scaling factor is used to determine the characteristic proportional value" includes the following meaning: the product of the number of serving cell(s) counted for at least one cell subset included in the first cell set and the first scaling factor is used to directly or indirectly calculate the characteristic proportional value.

In one embodiment, the statement in the claims that "a product of the number of serving cell(s) counted for at least one cell subset included in the first cell set and the first scaling factor is used to determine the characteristic proportional value" includes the following meaning: the characteristic proportional value is linearly correlated to the product of the number of serving cell(s) counted for at least one cell subset included in the first cell set and the first scaling factor.

In one embodiment, the statement in the claims that "a product of the number of serving cell(s) counted for at least one cell subset included in the first cell set and the first scaling factor is used to determine the characteristic proportional value" includes the following meaning: the characteristic proportional value is proportional to the product of the number of serving cell(s) counted for at least one cell subset included in the first cell set and the first scaling factor.

In one embodiment, the statement in the claims that "a product of the number of serving cell(s) counted for at least one cell subset included in the first cell set and the first scaling factor is used to determine the characteristic proportional value" is implemented by making the characteristic proportional value satisfy the following equation:

$$\vartheta = \sum_{i=0}^{K_\mu - 1} \alpha_{i,\mu} N_{\text{cells},i}^{\text{DL},\mu} / \sum_{j=0}^{3} \sum_{i=0}^{K_j - 1} \alpha_{i,j} N_{\text{cells},i}^{\text{DL},j}$$

where $N_{\text{cells},i}^{\text{DL},j}$ represents the number of serving cells counted for a cell subset i (numbered or indexed as i) included in the first cell set, of which the active BWP in the scheduling cell has a subcarrier spacing index equal to j, $\mu$ represents the index of the first subcarrier spacing, $\alpha_{i,j}$ is a scaling factor corresponding to a cell subset i of which the active BWP in the scheduling cell has a subcarrier spacing equal to j, and the first scaling factor is one of $\alpha_{i,j}$ ($i = 0, 1, ..., K_j - 1, j = 0, 1, 2, 3$), and $K_j$ represents the number of cell subset(s) included in the first cell set, of which the active BWP in the scheduling cell has a subcarrier spacing equal to j.

In one embodiment, the statement in the claims that "a product of the number of serving cell(s) counted for at least one cell subset included in the first cell set and the first scaling factor is used to determine the characteristic proportional value" is implemented by making the characteristic proportional value satisfy the following equation:

$$\vartheta = \left(N_{\text{cells},0}^{\text{DL},\mu} + \sum_{i=0}^{K_\mu-1} \alpha_{i,\mu} N_{\text{cells},1,i}^{\text{DL},\mu}\right)\Big/\sum_{j=0}^{3}\left(N_{\text{cells},0}^{\text{DL},j} + \sum_{i=0}^{K_j-1} \alpha_{i,j} N_{\text{cells},1,i}^{\text{DL},j}\right)$$

where $N_{\text{cells},0}^{\text{DL},j}$ represents the number of cell subset(s) each including only one serving cell included in the first cell set with the subcarrier spacing index of active BWP in the scheduling cell being equal to $j$; $N_{\text{cells},1,i}^{\text{DL},j}$ represents the number of serving cells counted for a cell subset i (numbered or indexed as i) including multiple serving cells included in the first cell set, of which the active BWP in the scheduling cell has a subcarrier spacing index equal to $j$, $\mu$ represents the index of the first subcarrier spacing, $\alpha_{i,j}$ is a scaling factor corresponding to a cell subset i of which the active BWP in the scheduling cell has a subcarrier spacing equal to $j$, and the first scaling factor is one of $\alpha_{i,j}$ ( $i = 0, 1, \ldots, K_j - 1, j = 0, 1, 2, 3$ ), and $K_j$ represents the number of cell subset(s) included in the first cell set, of which the active BWP in the scheduling cell has a subcarrier spacing equal to $j$.

In one embodiment, the statement in the claims that "a product of the number of serving cell(s) counted for at least one cell subset included in the first cell set and the first scaling factor is used to determine the characteristic proportional value" is implemented by making the characteristic proportional value satisfy the following equation:

$$\vartheta = \left(N_{\text{cells},0}^{\text{DL},\mu} + \alpha_\mu \cdot \sum_{i=0}^{K_\mu-1} N_{\text{cells},1,i}^{\text{DL},\mu}\right)\Big/\sum_{j=0}^{3}\left(N_{\text{cells},0}^{\text{DL},j} + \alpha_j \cdot \sum_{i=0}^{K_j-1} N_{\text{cells},1,i}^{\text{DL},j}\right)$$

where $N_{\text{cells},0}^{\text{DL},j}$ represents the number of cell subsets each including only one serving cell included in the first cell set with the subcarrier spacing index of active BWP in the scheduling cell being equal to $j$; $N_{\text{cells},1,i}^{\text{DL},j}$ represents the number of serving cells counted for a cell subset i (numbered or indexed as i) including multiple serving cells included in the first cell set, of which the active BWP in the scheduling cell has a subcarrier spacing index equal to $j$, $\mu$ represents the index of the first subcarrier spacing, $\alpha_j$ is a scaling factor corresponding to all cell subsets of which the active BWP in the scheduling cell has a subcarrier spacing equal to $j$, and the first scaling factor is one of $\alpha_j$ ( $j = 0, 1, 2, 3$ ), and $K_j$ represents the number of cell subset(s) each including multiple serving cells included in the first cell set, of which the active BWP in the scheduling cell has a subcarrier spacing equal to $j$.

In one embodiment, the statement in the claims that "a product of the number of serving cell(s) counted for at least one cell subset included in the first cell set and the first scaling factor is used to determine the characteristic proportional value" is implemented by making the characteristic proportional value satisfy the following equation:

$$\vartheta = \left(N_{\text{cells},0}^{\text{DL},\mu} + \gamma \cdot N_{\text{cells},1}^{\text{DL},\mu} + \sum_{i=0}^{K_\mu-1} \alpha_{i,\mu} N_{\text{cells},2,i}^{\text{DL},\mu}\right)\Big/\sum_{j=0}^{3}\left(N_{\text{cells},0}^{\text{DL},j} + \gamma \cdot N_{\text{cells},1}^{\text{DL},j} + \sum_{i=0}^{K_j-1} \alpha_{i,j} N_{\text{cells},2,i}^{\text{DL},j}\right)$$

where $N_{\text{cells},0}^{\text{DL},j}$ represents the number of cell subset(s) each including only one serving cell included in the first cell set with the subcarrier spacing index of active BWP in the scheduling cell being equal to $j$, and provided with only one CORESET pool index; $N_{\text{cells},1}^{\text{DL},j}$ represents the number of cell subset(s) each including only one serving cell included in the first cell set with the subcarrier spacing index of active BWP in the scheduling cell being equal to $j$, and provided with two CORESET pool indexes; $N_{\text{cells},2,i}^{\text{DL},j}$ represents the number of serving cells counted for a cell subset i (numbered or indexed as i) including multiple serving cells included in the first cell set, of which the active BWP in the scheduling cell has a subcarrier spacing index equal to $j$, $\mu$ represents the index of the first subcarrier spacing, $\alpha_{i,j}$ is a scaling factor corresponding to a cell subset i of which the active BWP in the scheduling cell has a subcarrier spacing equal to $j$, and the first scaling factor is one of $\alpha_{i,j}$ ( $i = 0, 1, \ldots, K_j - 1, j = 0, 1, 2, 3$ ), and $K_j$ represents the number of cell subset(s) included in the first cell set, of which the active BWP in the scheduling cell has a subcarrier spacing equal to *j*.

In one embodiment, the statement in the claims that "a product of the number of serving cell(s) counted for at least one cell subset included in the first cell set and the first scaling factor is used to determine the characteristic proportional value" is implemented by making the characteristic proportional value satisfy the following equation:

$$\vartheta = \left( N_{\text{cells},0}^{\text{DL},\mu} + \gamma \cdot N_{\text{cells},1}^{\text{DL},\mu} + \alpha_\mu \cdot \sum_{i=0}^{K_\mu - 1} N_{\text{cells},2,\text{i}}^{\text{DL},\mu} \right) \Big/ \sum_{j=0}^{3} \left( N_{\text{cells},0}^{\text{DL},j} + \gamma \cdot N_{\text{cells},1}^{\text{DL},j} + \alpha_j \cdot \sum_{i=0}^{K_j - 1} N_{\text{cells},2,\text{i}}^{\text{DL},j} \right)$$

where $N_{\text{cells},0}^{\text{DL},j}$ represents the number of cell subset(s) each including only one serving cell included in the first cell set with the subcarrier spacing index of active BWP in the scheduling cell being equal to *j*, and provided with only one CORESET pool index; $N_{\text{cells},1}^{\text{DL},j}$ represents the number of cell subset(s) each including only one serving cell included in the first cell set with the subcarrier spacing index of active BWP in the scheduling cell being equal to *j*, and provided with two CORESET pool indexes; $N_{\text{cells},2,\text{i}}^{\text{DL},j}$ represents the number of serving cells counted for a cell subset i (numbered or indexed as i) including multiple serving cells included in the first cell set, of which the active BWP in the scheduling cell has a subcarrier spacing index equal to *j*, $\mu$ represents the index of the first subcarrier spacing, $\alpha_j$ is a scaling factor corresponding to all cell subsets of which the active BWP in the scheduling cell has a subcarrier spacing equal to *j*, and the first scaling factor is one of $\alpha_j$ (*j* = 0, 1, 2, 3 ), and $K_j$ represents the number of cell subset(s) each including multiple serving cells included in the first cell set, of which the active BWP in the scheduling cell has a subcarrier spacing equal to *j*.

In one embodiment, the statement in the claims that "a product of the number of serving cell(s) counted for at least one cell subset included in the first cell set and the first scaling factor is used to determine the characteristic proportional value" is implemented by making the characteristic proportional value satisfy the following equation:

$$\vartheta = \left( \begin{array}{c} N_{\text{cells},0}^{\text{DL},\mu} + \gamma \cdot N_{\text{cells},1}^{\text{DL},\mu} + \sum_{i=0}^{K_{2,\mu}-1} \alpha_{2,i,\mu} N_{\text{cells},2,\text{i}}^{\text{DL},\mu} \\ + \gamma \cdot \sum_{i=0}^{K_{3,\mu}-1} \alpha_{3,i,\mu} N_{\text{cells},3,\text{i}}^{\text{DL},\mu} \end{array} \right) \Big/ \sum_{j=0}^{3} \left( \begin{array}{c} N_{\text{cells},0}^{\text{DL},j} + \gamma \cdot N_{\text{cells},1}^{\text{DL},j} \\ + \alpha_j \cdot \sum_{i=0}^{K_{2,j}-1} \alpha_{2,i,j} N_{\text{cells},2,\text{i}}^{\text{DL},j} + \gamma \cdot \sum_{i=0}^{K_{3,j}-1} \alpha_{3,i,j} N_{\text{cells},3,\text{i}}^{\text{DL},j} \end{array} \right)$$

where $N_{\text{cells},0}^{\text{DL},j}$ represents the number of cell subset(s) each including only one serving cell included in the first cell set with the subcarrier spacing index of active BWP in the scheduling cell being equal to *j* and provided with only one CORESET pool index; $N_{\text{cells},1}^{\text{DL},j}$ represents the number of cell subset(s) each including only one serving cell included in the first cell set with the subcarrier spacing index of active BWP in the scheduling cell being equal to *j*, and provided with two CORESET pool indexes; $N_{\text{cells},2,\text{i}}^{\text{DL},j}$ represents the number of serving cells counted for a cell subset i (numbered or indexed as i) including multiple serving cells and provided with only one CORESET pool index included in the first cell set, of which the active BWP in the scheduling cell has a subcarrier spacing index equal to j; $N_{\text{cells},3,\text{i}}^{\text{DL},j}$ represents the number of serving cells counted for a cell subset i (numbered or indexed as i) including multiple serving cells and provided with two CORESET pool indexes included in the first cell set, of which the active BWP in the scheduling cell has a subcarrier spacing index equal to *j*; $\mu$ represents the index of the first subcarrier spacing, $\alpha_{2,i,j}$ is a scaling factor corresponding to a cell subset i (numbered or indexed as i) including multiple serving cells and provided with only one CORESET pool index included in the first cell set, of which the active BWP in the scheduling cell has a subcarrier spacing equal to *j*, $\alpha_{3,i,j}$ is a scaling factor corresponding to a cell subset i (numbered or indexed as i) including multiple serving cells and provided with two CORESET pool indexes included in the first cell set, of which the active BWP in the scheduling cell has a subcarrier spacing equal to *j*, and the first scaling factor is one of $\alpha_{2,i,j}$ (*i* = 0,1, ..., $K_{2,j}$ - 1, *j* = 0,1,2,3 ) or $\alpha_{3,i,j}$ (*i* = 0,1, ..., $K_{3,j}$ - 1, *j* = 0,1,2,3 ); $K_{2,j}$ represents the number of cell subset(s) each including multiple serving cells included in the first cell set with the subcarrier spacing of active BWP in the scheduling cell being equal to *j* and provided with only one CORESET pool index; $K_{3,j}$ represents the number of cell subset(s) each including multiple serving cells included in the first cell set with the subcarrier spacing of active BWP in the scheduling cell being equal to j and provided with two CORESET pool indexes; $\gamma$ denotes the blind detection factor.

In one embodiment, the statement in the claims that "a product of the number of serving cell(s) counted for at least one cell subset included in the first cell set and the first scaling factor is used to determine the characteristic proportional value" is implemented by making the characteristic proportional value satisfy the following equation:

$$\vartheta = \left( \begin{array}{c} N_{\text{cells},0}^{\text{DL},\mu} + \gamma \cdot N_{\text{cells},1}^{\text{DL},\mu} + \alpha_\mu \cdot \sum_{i=0}^{K_{2,\mu}-1} N_{\text{cells},2,i}^{\text{DL},\mu} \\ + \gamma \cdot \alpha_\mu \cdot \sum_{i=0}^{K_{3,\mu}-1} N_{\text{cells},3,i}^{\text{DL},\mu} \end{array} \right) \bigg/ \sum_{j=0}^{3} \left( \begin{array}{c} N_{\text{cells},0}^{\text{DL},j} + \gamma \cdot N_{\text{cells},1}^{\text{DL},j} \\ + \alpha_j \cdot \sum_{i=0}^{K_{2,j}-1} N_{\text{cells},2,i}^{\text{DL},j} + \gamma \cdot \alpha_j \cdot \sum_{i=0}^{K_{3,j}-1} N_{\text{cells},3,i}^{\text{DL},j} \end{array} \right)$$

where $N_{\text{cells},0}^{\text{DL},j}$ represents the number of cell subset(s) each including only one serving cell included in the first cell set with the subcarrier spacing index of active BWP in the scheduling cell being equal to $j$ and provided with only one CORESET pool index; $N_{\text{cells},1}^{\text{DL},j}$ represents the number of cell subset(s) each including only one serving cell included in the first cell set with the subcarrier spacing index of active BWP in the scheduling cell being equal to $j$, and provided with two CORESET pool indexes; $N_{\text{cells},2,i}^{\text{DL},j}$ represents the number of serving cells counted for a cell subset i (numbered or indexed as i) including multiple serving cells and provided with only one CORESET pool index included in the first cell set, of which the active BWP in the scheduling cell has a subcarrier spacing index equal to $j$; $N_{\text{cells},3,i}^{\text{DL},j}$ represents the number of serving cells counted for a cell subset i (numbered or indexed as i) including multiple serving cells and provided with two CORESET pool indexes included in the first cell set, of which the active BWP in the scheduling cell has a subcarrier spacing index equal to $j$; $\mu$ represents the index of the first subcarrier spacing, $\alpha_j$ is a scaling factor corresponding to all cell subsets with the subcarrier spacing of active BWP in the scheduling cell being equal to $j$, and the first scaling factor is one of $\alpha_j$ ($j$ = 0, 1, 2, 3 ); $K_{2,j}$ represents the number of cell subset(s) each including multiple serving cells included in the first cell set with the subcarrier spacing of active BWP in the scheduling cell being equal to $j$ and provided with only one CORESET pool index; $K_{3,j}$ represents the number of cell subset(s) each including multiple serving cells included in the first cell set with the subcarrier spacing of active BWP in the scheduling cell being equal to $j$ and provided with two CORESET pool indexes.

## **Embodiment 8**

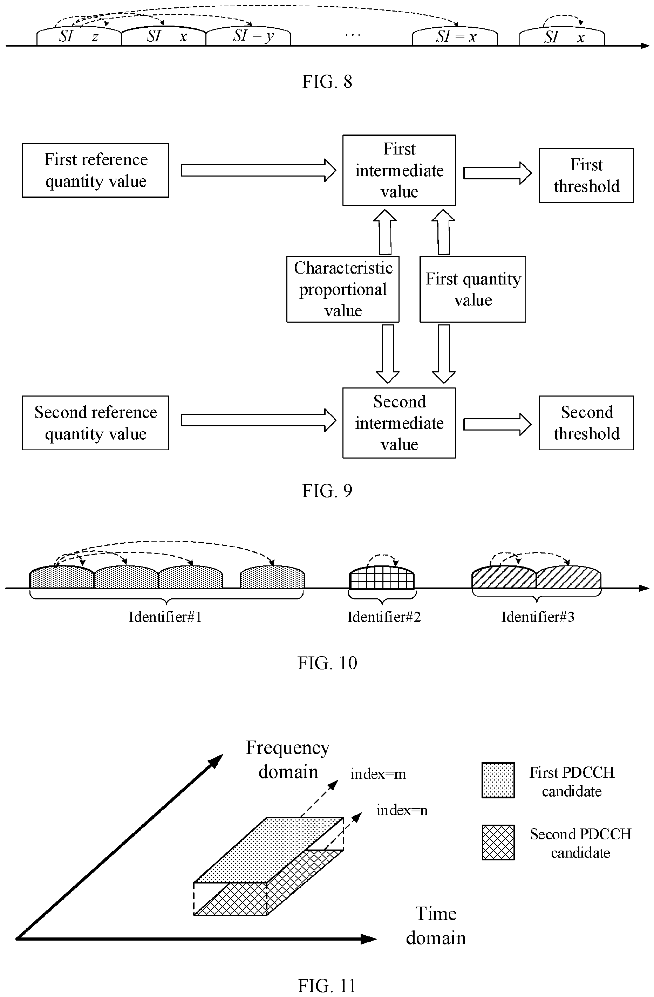

Embodiment 8 illustrates a schematic diagram of a scheduling indication value according to one embodiment of the present application, as shown in FIG. 8. In FIG. 8, each arc-top region represents a serving cell in the first cell set, each dot-filled arc-top region represents a serving cell in a characteristic cell subset, and the dotted lines with arrow represent the relationship of scheduling and being scheduled between serving cells, and an identifying scheduling indicator (SI) in each serving cell represents a corresponding scheduling indication value.

In Embodiment 8, each serving cell included in the first cell set in the present application corresponds to a scheduling indication value, serving cells included in the first cell set that correspond to equal scheduling indication values and have the same scheduling cell form a cell subset in the first cell set; at least one of a number of bits of at least one field included in a DCI format or a number of fields included in a DCI format is related to a number of serving cells included in the cell subset in the first cell set being scheduled.

In one embodiment, the scheduling indication value corresponding to any serving cell included in the first cell set is equal to a value of a carrier indicator field (CIF).

In one embodiment, the scheduling indication value corresponding to any serving cell included in the first cell set is equal to a value of a CIF of a corresponding serving cell.

In one embodiment, the scheduling indication value corresponding to any serving cell included in the first cell set is equal to a value of an indication independent of the CIF.

In one embodiment, the scheduling indication value corresponding to any serving cell included in the first cell set is equal to a value of an indication other than a CIF of a corresponding serving cell.

In one embodiment, the scheduling indication value corresponding to one serving cell included in the first cell set is respectively equal to a value of an indication other than a CIF of a corresponding serving cell, and a scheduling indication value corresponding to another serving cell included in the first cell set is equal to a value of a CIF of the corresponding serving cell.

In one embodiment, the scheduling indication value corresponding to any serving cell included in the first cell set is a configured value independent of a CIF of a corresponding serving cell.

In one embodiment, the scheduling indication value corresponding to any serving cell included in the first cell set is equal to a value configured by a field other than the field configuring a CIF value of a corresponding serving cell.

In one embodiment, the scheduling indication value corresponding to at least one or any serving cell included in the first cell set is configured independently from a CIF value.

In one embodiment, there exists one serving cell in the first cell set corresponding to a scheduling indication value that is equal to a default value or a predefined value.

In one embodiment, there exists one serving cell in the first cell set corresponding to a scheduling indication value that is equal to 0.

In one embodiment, there exists at least one serving cell in the first cell set corresponding to (a) scheduling indication value(s) being signaling configured.

In one embodiment, any serving cell included in the first cell set corresponds to a scheduling indication value that is greater than 0.

In one embodiment, the first cell set includes two serving cells respectively corresponding to scheduling indication values that are not equal.

In one embodiment, the first cell set includes two serving cells respectively corresponding to scheduling indication values that are equal.

In one embodiment, any two serving cells included in the first cell set respectively correspond to scheduling indication values that are not equal.

In one embodiment, the first information block is used to explicitly or implicitly indicate at least one scheduling indication value corresponding to at least one serving cell included in the first cell set.

In one embodiment, an information block other than the first information block is used to explicitly or implicitly indicate at least one scheduling indication value corresponding to at least one serving cell included in the first cell set.

In one embodiment, the at least one scheduling indication value corresponding to each of the at least one serving cell included in the first cell set is configured explicitly or implicitly by an IE configuring a CIF value of a corresponding serving cell.

In one embodiment, the at least one scheduling indication value corresponding to each of the at least one serving cell included in the first cell set is configured explicitly or implicitly by an IE other than the IE configuring a CIF value of a corresponding serving cell.

In one embodiment, the at least one scheduling indication value corresponding to each of the at least one serving cell included in the first cell set is configured explicitly or implicitly by an IE configuring a corresponding serving cell.

In one embodiment, any serving cell included in the first cell set corresponds to a scheduling indication value that is a positive integer no greater than 7.

In one embodiment, any serving cell included in the first cell set corresponds to a scheduling indication value that is a non-negative integer no greater than 7.

In one embodiment, any serving cell included in the first cell set corresponds to a scheduling indication value that is no greater than 31.

In one embodiment, a serving cell included in the first cell set corresponds to a scheduling indication value that is greater than 7.

In one embodiment, any serving cell included in the first cell set corresponds to a scheduling indication value that is greater than 7.

In one embodiment, a serving cell included in the first cell set corresponds to a scheduling indication value that is greater than 31.

In one embodiment, any serving cell included in the first cell set corresponds to a scheduling indication value that is greater than 31.

In one embodiment, any serving cell included in the first cell set corresponds to a scheduling indication value with a pre-defined value range.

In one embodiment, any serving cell included in the first cell set corresponds to a scheduling indication value with a configurable value range.

In one embodiment, any serving cell included in the first cell set corresponds to a scheduling indication value with a value range relating to the protocol release.

In one embodiment, the correspondence between a serving cell included in the first cell set and a corresponding scheduling indication value is configurable or predefined.

In one embodiment, a scheduling indication value corresponding to a serving cell included in the first cell set is an indication value applicable for this serving cell.

In one embodiment, a scheduling indication value corresponding to a serving cell included in the first cell set is an indication value indicating an applicable grant or assignment for this serving cell.

In one embodiment, a scheduling indication value corresponding to a serving cell included in the first cell set is an indication value for determining the distribution or location of a PDCCH candidate for scheduling this serving cell in a search space set to which it belongs.

In one embodiment, a scheduling indication value corresponding to a serving cell included in the first cell set is an indication value configured for this serving cell.

In one embodiment, a scheduling indication value corresponding to a serving cell included in the first cell set is an indication value associated to this serving cell.

In one embodiment, a scheduling indication value corresponding to any serving cell included in the first cell set is used in the scheduling cell of this serving cell.

In one embodiment, a value range of a scheduling indication value corresponding to a serving cell included in the first cell set is used to determine whether the corresponding serving cell is scheduled together with other serving cells.

In one embodiment, the statement in the claims that "serving cells included in the first cell set that correspond to equal scheduling indication values and have the same scheduling cell form a cell subset in the first cell set" and the statement that "any two serving cells included in any cell subset of the first cell set including multiple serving cells correspond to equal scheduling indication values and have the same scheduling cell" are equivalent or may be used interchangeably.

In one embodiment, the statement in the claims that "serving cells included in the first cell set that correspond to equal scheduling indication values and have the same scheduling cell form a cell subset in the first cell set" and the statement that "any two serving cells included in a given cell subset of the first cell set including multiple serving cells correspond to equal scheduling indication values and have the same scheduling cell" are equivalent or may be used interchangeably.

In one embodiment, the statement in the claims that "serving cells included in the first cell set that correspond to equal scheduling indication values and have the same scheduling cell form a cell subset in the first cell set" and the statement that "any cell subset of the first cell set including multiple serving cells consists of serving cells that correspond to equal scheduling indication values and have the same scheduling cell" are equivalent or may be used interchangeably.

In one embodiment, a scheduling cell of a serving cell is a serving cell that carries scheduling information for a channel or signal on this serving cell.

In one embodiment, a scheduling cell of a serving cell is a serving cell to which the grant or assignment carrying this serving cell belongs.

In one embodiment, a scheduling cell of a serving cell is a serving cell to which a PDCCH scheduling a channel or signal on this serving cell belongs.

In one embodiment, when self-scheduling is used, a scheduling cell of a serving cell is this serving cell itself; when cross-carrier scheduling is used, the scheduling cell of a serving cell is a serving cell other than this serving cell.

In one embodiment, the statement in the claims that "at least one of a number of bits of at least one field included in a DCI format or a number of fields included in a DCI format is related to a number of serving cells included in the cell subset in the first cell set being scheduled" includes the following meaning: the number of bits of at least one field included in a DCI format is related to the number of serving cells included in the cell subset in the first cell set being scheduled.

In one embodiment, the statement in the claims that "at least one of a number of bits of at least one field included in a DCI format or a number of fields included in a DCI format is related to a number of serving cells included in the cell subset in the first cell set being scheduled" includes the following meaning: the number of fields included in a DCI format is related to the number of serving cells included in the cell subset in the first cell set being scheduled.

In one embodiment, the statement in the claims that "at least one of a number of bits of at least one field included in a DCI format or a number of fields included in a DCI format is related to a number of serving cells included in the cell subset in the first cell set being scheduled" includes the following meaning: the number of bits of at least one field included in a DCI format and the number of fields included in a DCI format are both related to the number of serving cells included in the cell subset in the first cell set being scheduled.

In one embodiment, the statement in the claims that "at least one of a number of bits of at least one field included in a DCI format or a number of fields included in a DCI format is related to a number of serving cells included in the cell subset in the first cell set being scheduled" includes the following meaning: at least one of the number of bits of at least one field included in a DCI format or the number of fields included in a DCI format is linearly correlated to the number of serving cells included in the cell subset in the first cell set being scheduled.

In one embodiment, the statement in the claims that "at least one of a number of bits of at least one field included in a DCI format or a number of fields included in a DCI format is related to a number of serving cells included in the cell subset in the first cell set being scheduled" includes the following meaning: at least one of the number of bits of at least one field included in a DCI format or the number of fields included in a DCI format is positively correlated to the number of serving cells included in the cell subset in the first cell set being scheduled.

In one embodiment, the statement in the claims that "at least one of a number of bits of at least one field included in a DCI format or a number of fields included in a DCI format is related to a number of serving cells included in the cell subset in the first cell set being scheduled" includes the following meaning: a number of serving cells included in the cell subset in the first cell set being scheduled by a DCI format is used to determine, based on a conditional relationship or a mapping rule, at least one of a number of bits of at least one field included in this DCI format or a number of fields included in this DCI format.

In one embodiment, the statement in the claims that "at least one of a number of bits of at least one field included in a DCI format or a number of fields included in a DCI format is related to a number of serving cells included in the cell subset in the first cell set being scheduled" includes the following meaning: a number of serving cells included in the cell subset in the first cell set being scheduled by a DCI format is used to calculate at least one of a number of bits of at least one field included in this DCI format or a number of fields included in this DCI format.

In one embodiment, the statement in the claims that "at least one of a number of bits of at least one field included in a DCI format or a number of fields included in a DCI format is related to a number of serving cells included in the cell subset in the first cell set being scheduled" includes the following meaning: the number of bits of at least one field included in a DCI format is equal to a value obtained by rounding up the logarithm of the number of serving cells included in the cell subset in the first cell set being scheduled by the DCI format to a nearest integer.

In one embodiment, the statement in the claims that "at least one of a number of bits of at least one field included in a DCI format or a number of fields included in a DCI format is related to a number of serving cells included in the cell subset in the first cell set being scheduled" includes the following meaning: the number of fields included in a DCI format is equal to a value obtained by rounding up the logarithm of the number of serving cells included in the cell subset in the first cell set being scheduled by the DCI format to a nearest integer.

In one embodiment, the statement in the claims that "at least one of a number of bits of at least one field included in a DCI format or a number of fields included in a DCI format is related to a number of serving cells included in the cell subset in the first cell set being scheduled" includes the following meaning: at least one of the number of bits of at least one field included in a DCI format or the number of fields included in a DCI format is equal to a value obtained by rounding up the logarithm of the number of serving cells included in the cell subset in the first cell set being scheduled by the DCI format to a nearest integer.

In one embodiment, a number of bits included in a field included in a DCI format is equal to a bit width of this field.

In one embodiment, a number of bits included in a New Data Indicator (NDI) field included in a DCI format is related to the number of serving cells included in a cell subset in the first cell set being scheduled.

In one embodiment, a number of bits included in a HARQ Process Number field included in a DCI format is related to the number of serving cells included in a cell subset in the first cell set being scheduled.

In one embodiment, a number of bits included in a Modulation and coding scheme (MCS) field included in a DCI format is related to the number of serving cells included in a cell subset in the first cell set being scheduled.

In one embodiment, a number of bits included in at least one field of a Frequency domain resource assignment field, a Time domain resource assignment field, a Physical Uplink Control Channel (PUCCH) resource indicator field, a PDSCH to HARQ feedback timing indication field, an antenna port field, or a transmission configuration indication (TCI) field is related to the number of serving cells included in a cell subset in the first cell set being scheduled.

In one embodiment, a total number of fields included in a DCI format is related to the number of serving cells included in a cell subset in the first cell set being scheduled.

In one embodiment, a total number of fields included in a DCI format is linearly correlated to the number of serving cells included in a cell subset in the first cell set being scheduled.

In one embodiment, a total number of fields included in a DCI format is positively correlated to the number of serving cells included in a cell subset in the first cell set being scheduled.

In one embodiment, a total number of fields of a same type included in a DCI format is related to the number of serving cells included in a cell subset in the first cell set being scheduled, where the same type refers to one of or a combination of multiple of NDI, HARQ process number, RV, MCS, frequency domain resource assignment, time domain resource assignment, PUCCH resource indication, PDSCH to HARQ feedback timing indication, antenna port or TCI.

Embodiment 9

Embodiment 9 illustrates a schematic diagram of a first threshold and a second threshold according to one embodiment of the present application, as shown in FIG. 9. In FIG. 9, two boxes represent a first threshold and a second threshold, respectively, and the two boxes represent a first intermediate value and a second intermediate value, respectively.

In Embodiment 9, the first threshold in this application is equal to a maximum integer that is no greater than a first intermediate value, and the second threshold in this application is equal to a maximum integer that is no greater than a second intermediate value; the third information block in this application is used to indicate a first quantity value, the first quantity value being a positive integer, and a number of serving cell(s) included in any cell subset included in the first cell set of this application is no greater than the first quantity value; the first SCS in this application is used to determine a first reference quantity value and a second reference quantity value; the first quantity value, the first reference quantity value and the characteristic proportional value of this application are used together to determine the first intermediate value, while the first quantity value, the second reference quantity value and the characteristic proportional value of this application are used together to determine the second intermediate value.

In one embodiment, the first threshold is a value obtained by rounding down the first intermediate value to a nearest integer.

In one embodiment, the second threshold is a value obtained by rounding down the second intermediate value to a nearest integer.

In one embodiment, the first intermediate value is a positive integer.

In one embodiment, the first intermediate value is a non-integer.

In one embodiment, the second intermediate value is a positive integer.

In one embodiment, the second intermediate value is a non-integer.

In one embodiment, the first quantity value is greater than 1.

In one embodiment, the first quantity value can be equal to 1.

In one embodiment, the first quantity value is no greater than 4.

In one embodiment, the first quantity value can be greater than 4.

In one embodiment, the first quantity value is no greater than 16.

In one embodiment, the first quantity value is a maximum number of carriers for carrier aggregation at the blind detection supported by the capability of the first node.

In one embodiment, the first quantity value is a maximum number of serving cells corresponding to blind detection supported by the capability of the first node.

In one embodiment, the number of serving cell(s) included in any cell subset included in the first cell set is less than the first quantity value.

In one embodiment, the number of serving cell(s) included in a cell subset included in the first cell set is equal to the first quantity value.

In one embodiment, the statement "the first SCS is used to determine a first reference quantity value and a second reference quantity value" in the claims includes the following meaning: the first SCS is used by the first node or the second node of this application to determine the first reference quantity value and the second reference quantity value.

In one embodiment, the statement "the first SCS is used to determine a first reference quantity value and a second reference quantity value" in the claims includes the following meaning: the first SCS and a pre-defined mapping relationship are used to determine the first reference quantity value and the second reference quantity value.

In one embodiment, the statement "the first SCS is used to determine a first reference quantity value and a second reference quantity value" in the claims includes the following meaning: the first SCS is one of X candidate SCSs, where X is a positive integer greater than 1;the X candidate SCSs respectively correspond to X first-type candidate quantity values, and any first-type candidate quantity value among the X first-type candidate quantity values is a positive integer, the X candidate SCSs respectively correspond to X second-type candidate quantity values, and any second-type candidate quantity value among the X second-type candidate quantity values is a positive integer; the first reference quantity value is a first-type candidate quantity value corresponding to the first SCS among the X first-type candidate quantity values, while the second reference quantity value is a second-type candidate quantity value corresponding to the first SCS among the X second-type candidate quantity values. In one subsidiary embodiment of the above embodiment, the one-to-one correspondence relation between the X candidate SCSs and the X first-type candidate quantity values is pre-defined, and the one-to-one correspondence relation between the X candidate SCSs and the X second-type candidate quantity values is pre-defined. In one subsidiary embodiment of the above embodiment, the one-to-one correspondence relation between the X candidate SCSs and the X first-type candidate quantity values is configured, and the one-to-one correspondence relation between the X candidate SCSs and the X second-type candidate quantity values is configured. In one subsidiary embodiment of the above embodiment, the one-to-one correspondence relation between the X candidate SCSs and the X first-type candidate quantity values is related to the length of the first time window, and the one-to-one correspondence relation between the X candidate SCSs and the X second-type candidate quantity values is related to the length of the first time window.

In one embodiment, the first quantity value is a maximum number of PDCCH candidates being monitored for a serving cell.

In one embodiment, the first quantity value is an upper limit of a number of PDCCH candidates being monitored for a serving cell.

In one embodiment, the second quantity value is a maximum number of non-overlapped CCEs being monitored for a serving cell.

In one embodiment, the second quantity value is an upper limit of a number of non-overlapped CCEs being monitored for a serving cell.

In one embodiment, the statement in the claims that "the first quantity value, the first reference quantity value and the characteristic proportional value are used together to determine the first intermediate value, while the first quantity value, the second reference quantity value and the characteristic proportional value are used together to determine the second intermediate value" includes the following meaning: the first quantity value, the first reference quantity value and the characteristic proportional value are used together by the first node or the second node of the present application to determine the first intermediate value, while the first quantity value, the second reference quantity value and the characteristic proportional value are used together by the first node or the second node of the present application to determine the second intermediate value.

In one embodiment, the statement in the claims that "the first quantity value, the first reference quantity value and the characteristic proportional value are used together to determine the first intermediate value, while the first quantity value, the second reference quantity value and the characteristic proportional value are used together to determine the second intermediate value" includes the following meaning: the first intermediate value is proportional to the first quantity value, the first intermediate value is proportional to the first reference quantity value, and the first intermediate value is proportional to the characteristic proportional value, while the second intermediate value is proportional to the first quantity value, the second intermediate value is proportional to the second reference quantity value, and the second intermediate value is proportional to the characteristic proportional value.

In one embodiment, the statement in the claims that "the first quantity value, the first reference quantity value and the characteristic proportional value are used together to determine the first intermediate value, while the first quantity value, the second reference quantity value and the characteristic proportional value are used together to determine the second intermediate value" includes the following meaning: the first intermediate value is linearly correlated to the first quantity value, the first intermediate value is linearly correlated to the first reference quantity value, and the first intermediate value is linearly correlated to the characteristic proportional value, while the second intermediate value is linearly correlated to the first quantity value, the second intermediate value is linearly correlated to the second reference quantity value, and the second intermediate value is linearly correlated to the characteristic proportional value.

In one embodiment, the statement in the claims that "the first quantity value, the first reference quantity value and the characteristic proportional value are used together to determine the first intermediate value, while the first quantity value, the second reference quantity value and the characteristic proportional value are used together to determine the second intermediate value" includes the following meaning: the product of the first quantity value, the first reference quantity value and the characteristic proportional value is used to determine the first intermediate value, while the product of the first quantity value, the second reference quantity value and the characteristic proportional value is used to determine the second intermediate value.

In one embodiment, the statement in the claims that "the first quantity value, the first reference quantity value and the characteristic proportional value are used together to determine the first intermediate value, while the first quantity value, the second reference quantity value and the characteristic proportional value are used together to determine the second intermediate value" is implemented by satisfying the following equation:

$$V_1 = N_{\text{cells}}^{\text{cap}} \cdot M_{\text{PDCCH}}^{\max,\text{slot},\mu} \cdot \vartheta; V_2 = N_{\text{cells}}^{\text{cap}} \cdot C_{\text{PDCCH}}^{\max,\text{slot},\mu} \cdot \vartheta$$

where $V_1$ represents the first intermediate value, $V_2$ represents the second intermediate value, $\vartheta$ represents the characteristic proportion value, $N_{\text{cells}}^{\text{cap}}$ represents the first quantity value, $M_{\text{PDCCH}}^{\max,\text{slot},\mu}$ and $C_{\text{PDCCH}}^{\max,\text{slot},\mu}$ represent the first reference quantity value and the second reference quantity value respectively, the first time window being a slot.

In one embodiment, the statement in the claims that "the first quantity value, the first reference quantity value and the characteristic proportional value are used together to determine the first intermediate value, while the first quantity value, the second reference quantity value and the characteristic proportional value are used together to determine the second intermediate value" is implemented by satisfying the following equation:

$$V_1 = N_{\text{cells}}^{\text{cap-r16}} \cdot M_{\text{PDCCH}}^{\max,(X,Y),\mu} \cdot \vartheta; V_2 = N_{\text{cells}}^{\text{cap-r16}} \cdot C_{\text{PDCCH}}^{\max,(X,Y),\mu} \cdot \vartheta$$

where $V_1$ represents the first intermediate value, $V_2$ represents the second intermediate value, $\vartheta$ represents the characteristic proportion value, $N_{\text{cells}}^{\text{cap-r16}}$ represents the first quantity value, $M_{\text{PDCCH}}^{\max,(X,Y),\mu}$ and $C_{\text{PDCCH}}^{\max,(X,Y),\mu}$ represent the first reference quantity value and the second reference quantity value respectively, the first time window comprises X time-domain consecutive multicarrier symbols.

## Embodiment 10

Embodiment 10 illustrates a schematic diagram of a first identifier according to one embodiment of the present application, as shown in FIG. 10. In FIG. 10, each arc-top region represents a serving cell in the first cell set, serving cells represented by arc-top regions having the same filling form a cell subset in the first cell set, and the first identifier is an identifier of the cell subset in the first cell set.

In Embodiment 10, a cell subset included in the first cell set in the present application corresponds to a first identifier, and the cell subset corresponding to the first identifier includes multiple serving cells, and a scheduling cell for all the serving cells included in the cell subset corresponding to the first identifier is a target scheduling cell; the first identifier is used to determine in a search space set on the target scheduling cell a PDCCH candidate that is used to schedule the cell subset corresponding to the first identifier.

In one embodiment, the first identifier is configured for a corresponding cell subset.

In one embodiment, the first identifier is applicable for a corresponding cell subset.

In one embodiment, the first identifier is configured through a signaling configuring a corresponding cell subset.

In one embodiment, the first identifier and a corresponding cell subset are configured through a same IE.

In one embodiment, a cell subset corresponding to the first identifier is a cell subset associated with the first identifier.

In one embodiment, any cell subset included in the first cell set corresponds to an identifier.

In one embodiment, any cell subset included in the first cell set corresponds to an identifier, any cell subset included in the first cell set that includes only one serving cell corresponds to an identifier that is a CIF, and any cell subset included in the first cell set that includes multiple serving cells corresponds to an identifier that is a maximum one of all CIFs of the multiple serving cells included.

In one embodiment, any cell subset included in the first cell set corresponds to an identifier, any cell subset included in the first cell set that includes only one serving cell corresponds to an identifier that is a CIF, and any cell subset included in the first cell set that includes multiple serving cells corresponds to an identifier that is a minimum one of all CIFs of the multiple serving cells included.

In one embodiment, any cell subset included in the first cell set corresponds to an identifier, any cell subset included in the first cell set that includes only one serving cell corresponds to an identifier that is a CIF, and any cell subset included in the first cell set that includes multiple serving cells corresponds to an identifier that is a pre-defined one of all CIFs of the multiple serving cells included.

In one embodiment, any cell subset included in the first cell set corresponds to an identifier, any cell subset included in the first cell set that includes only one serving cell corresponds to an identifier that is the corresponding scheduling indication value of this application, and any cell subset included in the first cell set that includes multiple serving cells corresponds to an identifier that is a pre-defined one of all scheduling indication values respectively corresponding to the multiple serving cells included.

In one embodiment, any cell subset included in the first cell set corresponds to an identifier, any cell subset included in the first cell set that includes only one serving cell corresponds to an identifier that is the corresponding scheduling indication value of this application, and any cell subset included in the first cell set that includes multiple serving cells corresponds to an identifier that is a maximum one of all scheduling indication values respectively corresponding to the multiple serving cells included.

In one embodiment, any cell subset included in the first cell set corresponds to an identifier, any cell subset included in the first cell set that includes only one serving cell corresponds to an identifier that is the corresponding scheduling indication value of this application, and any cell subset included in the first cell set that includes multiple serving cells corresponds to an identifier that is a minimum one of all scheduling indication values respectively corresponding to the multiple serving cells included.

In one embodiment, the first identifier is equal to a CIF value.

In one embodiment, the first identifier is equal to a scheduling indication value in this application.

In one embodiment, the first identifier is a non-negative integer.

In one embodiment, the first identifier is a positive integer.

In one embodiment, the first identifier is equal to a predefined value or equal to a configured value.

In one embodiment, the first identifier is equal to a CIF value of one serving cell in a corresponding cell subset.

In one embodiment, the first identifier is equal to a scheduling indication value of one serving cell in a corresponding cell subset.

In one embodiment, the first identifier is equal to a maximum one of CIF values of all serving cells in a corresponding cell subset.

In one embodiment, the first identifier is equal to a minimum one of CIF values of all serving cells in a corresponding cell subset.

In one embodiment, the first identifier is equal to a pre-defined one of CIF values of all serving cells in a corresponding cell subset.

In one embodiment, the first identifier is equal to a maximum one of scheduling indication values of all serving cells in a corresponding cell subset.

In one embodiment, the first identifier is equal to a minimum one of scheduling indication values of all serving cells in a corresponding cell subset.

In one embodiment, the first identifier is equal to a pre-defined one of scheduling indication values of all serving cells in a corresponding cell subset.

In one embodiment, a cell subset corresponding to the first identifier is the characteristic cell subset in the present application.

In one embodiment, a cell subset corresponding to the first identifier is a cell subset other than the characteristic cell subset in the present application.

In one embodiment, a cell subset corresponding to the first identifier is any cell subset included in the first cell set that includes multiple serving cells.

In one embodiment, a cell subset corresponding to the first identifier is a given cell subset included in the first cell set that includes multiple serving cells.

In one embodiment, any two serving cells included in a cell subset corresponding to the first identifier are scheduled by a same serving cell.

In one embodiment, all serving cells included in a cell subset corresponding to the first identifier may be scheduled by a same PDCCH.

In one embodiment, one DCI format schedules all serving cells included in a cell subset corresponding to the first identifier.

In one embodiment, the target scheduling cell is a serving cell included in the first cell set.

In one embodiment, the target scheduling cell is a serving cell outside of the first cell set.

In one embodiment, the target scheduling cell is a serving cell included in a cell subset corresponding to the first identifier.

In one embodiment, the target scheduling cell is a serving cell outside of a cell subset corresponding to the first identifier.

In one embodiment, the target scheduling cell is a scheduling cell for each serving cell included in a cell subset corresponding to the first identifier.

In one embodiment, the target scheduling cell cross-carrier schedules each serving cell included in a cell subset corresponding to the first identifier.

In one embodiment, the target scheduling cell self-schedules one serving cell included in a cell subset corresponding to the first identifier.

In one embodiment, the statement in the claims that "the first identifier is used to determine from a search space set on the target scheduling cell a PDCCH candidate that is used to schedule the cell subset corresponding to the first identifier" includes the following meaning: the first identifier is used by the first node or the second node of the present application to determine from a search space set on the target scheduling cell a PDCCH candidate that is used to schedule the cell subset corresponding to the first identifier.

In one embodiment, the statement in the claims that "the first identifier is used to determine from a search space set on the target scheduling cell a PDCCH candidate that is used to schedule the cell subset corresponding to the first identifier" includes the following meaning: the first identifier is used to determine from a search space set on the target scheduling cell a PDCCH candidate that is used to schedule a start index of the cell subset corresponding to the first identifier.

In one embodiment, the statement in the claims that "the first identifier is used to determine from a search space set on the target scheduling cell a PDCCH candidate that is used to schedule the cell subset corresponding to the first identifier" includes the following meaning: the first identifier is used to determine from a search space set on the target scheduling cell the distribution of a PDCCH candidate that is used to schedule the cell subset corresponding to the first identifier in a search space set to which the PDCCH candidate belongs.

In one embodiment, the statement in the claims that "the first identifier is used to determine from a search space set on the target scheduling cell a PDCCH candidate that is used to schedule the cell subset corresponding to the first identifier" includes the following meaning: the first identifier is used to determine from a search space set on the target scheduling cell all PDCCH candidates that are used to schedule the cell subset corresponding to the first identifier.

In one embodiment, the statement in the claims that "the first identifier is used to determine from a search space set on the target scheduling cell a PDCCH candidate that is used to schedule the cell subset corresponding to the first identifier" includes the following meaning: the first identifier is used to determine from a search space set on the target scheduling cell CCEs occupied by a PDCCH candidate that is used to schedule the cell subset corresponding to the first identifier.

In one embodiment, the statement in the claims that "the first identifier is used to determine from a search space set on the target scheduling cell a PDCCH candidate that is used to schedule the cell subset corresponding to the first identifier" is implemented by satisfying the following relationship:

at least one PDCCH candidate scheduling a cell subset corresponding to the first identifier belongs to a search space set s, the search space set s is associated to CORESET *p, L* represents an aggregation level (AL) of at least one PDCCH candidate scheduling the cell subset corresponding to the first identifier, and an index of CCEs occupied by a PDCCH candidate $m_{s,n_{SI}}^{(L)}$ for the first identifier $n_{SI}$ that is used to schedule the cell subset corresponding to the first identifier satisfies the following:

$$L \cdot \left\{ \left( Y_{p,n_{s,f}^{\mu}} + \left\lfloor \frac{m_{s,n_{SI}}^{(L)} \cdot N_{\mathrm{CCE},p}}{L \cdot M_{s,\mathrm{max}}^{(L)}} \right\rfloor + n_{SI} \right) mod \left\lfloor N_{\mathrm{CCE},p}/L \right\rfloor \right\} + i$$

where i = 0, $\cdots$, *L* - 1, $Y_{p,n_{s,f}^{\mu}}$ is a value related to CORESET p, $N_{\mathrm{CCE},p}$ represents the number of CCEs in CORESET p, and $M_{s,\mathrm{max}}^{(L)}$ represents the number of PDCCH candidates for scheduling the cell subset corresponding to the first identifier, which belong to the search space set s and employ the aggregation level *L*.

In one embodiment, the number of PDCCH candidates for scheduling a cell subset corresponding to the first identifier is configured or predefined.

In one embodiment, the number per aggregation level (AL) of PDCCH candidates for scheduling a cell subset corresponding to the first identifier is configured or predefined.

In one embodiment, the aggregation level (AL) of PDCCH candidates for scheduling a cell subset corresponding to the first identifier is configured or predefined.

## Embodiment 11

Embodiment 11 illustrates a schematic diagram of a relationship between a first PDCCH candidate and a second PDCCH candidate according to one embodiment of the present application, as shown in FIG. 11. In FIG. 11, the dot-filled portion represents a first PDCCH candidate and the cross-filled portion represents a second PDCCH candidate.

In Embodiment 11, a first PDCCH candidate and a second PDCCH candidate are both used to schedule one same cell subset included in the first cell set of the present application, the first PDCCH candidate and the second PDCCH candidate occupying same CCE(s), and the first PDCCH candidate has a same scrambling as the second PDCCH candidate, a DCI format carried by the first PDCCH candidate is of the same size as a DCI format carried by the second PDCCH candidate, and an index of the first PDCCH candidate is unequal to an index of the second PDCCH candidate; only one PDCCH candidate between the first PDCCH candidate and the second PDCCH candidate is counted for monitoring.

In one embodiment, the first node in this application assumes that the first PDCCH candidate and the second PDCCH candidate are both used to schedule the same cell subset included in the first cell set.

In one embodiment, the first node in this application assumes that the first PDCCH candidate and the second PDCCH candidate are both used to schedule all serving cells in the same cell subset included in the first cell set.

In one embodiment, the first node in this application assumes that the first PDCCH candidate and the second PDCCH candidate both carry a DCI format for scheduling the same cell subset included in the first cell set.

In one embodiment, the first node in this application assumes that the first PDCCH candidate and the second PDCCH candidate both carry a DCI format for scheduling the same cell subset including multiple serving cells included in the first cell set.

In one embodiment, the first node in this application assumes that the first PDCCH candidate and the second PDCCH candidate both carry a DCI format for scheduling all of the serving cells in the same cell subset including multiple serving cells included in the first cell set.

In one embodiment, both the first PDCCH candidate and the second PDCCH candidate are used to schedule the characteristic cell subset in this application.

In one embodiment, the first PDCCH candidate and the second PDCCH candidate are both used to schedule a cell subset other than the characteristic cell subset in this application.

In one embodiment, the first PDCCH candidate occupies at least one CCE, the second PDCCH candidate occupies at least one CCE, and the at least one CCE occupied by the second PDCCH candidate is(are) exactly the same as the at least one CCE occupied by the first PDCCH candidate.

In one embodiment, the second PDCCH candidate and the first PDCCH candidate occupy the same CCE set.

In one embodiment, the second PDCCH candidate and the first PDCCH candidate occupy exactly the same time-frequency domain resources in the time-frequency domain.

In one embodiment, any CCE occupied by the second PDCCH candidate is simultaneously occupied by the first PDCCH candidate, and any CCE occupied by the first PDCCH candidate is simultaneously occupied by the second PDCCH candidate.

In one embodiment, CCE(s) occupied by the second PDCCH candidate and CCE(s) occupied by the first PDCCH candidate are fully overlapped.

In one embodiment, the first PDCCH candidate and the second PDCCH candidate belong to a same Search Space Set.

In one embodiment, the first PDCCH candidate and the second PDCCH candidate respectively belong to two different Search Space Sets.

In one embodiment, a Control Resource Set (CORESET) corresponding to a Search Space Set to which the first PDCCH candidate belongs and a CORESET corresponding to a Search Space Set to which the second PDCCH candidate belongs are identical.

In one embodiment, the statement in the claims that "the first PDCCH candidate has a same scrambling as the second PDCCH candidate" includes the following meaning: a first scrambling sequence is a scrambling sequence of a PDCCH carried by the first PDCCH candidate, and a second scrambling sequence is a scrambling sequence of a PDCCH carried by the second PDCCH candidate, the first scrambling sequence and the second scrambling sequence being the same.

In one embodiment, the statement in the claims that "the first PDCCH candidate has a same scrambling as the second PDCCH candidate" includes the following meaning: a first scrambling sequence is a scrambling sequence of a PDCCH carried by the first PDCCH candidate, and a second scrambling sequence is a scrambling sequence of a PDCCH carried by the second PDCCH candidate, elements in the first scrambling sequence and elements in the second scrambling sequence being in one-to-one correspondence.

In one embodiment, the statement in the claims that "the first PDCCH candidate has a same scrambling as the second PDCCH candidate" includes the following meaning: a first scrambling sequence is a scrambling sequence of a PDCCH carried by the first PDCCH candidate, and a second scrambling sequence is a scrambling sequence of a PDCCH carried by the second PDCCH candidate, an initial value of a Generator for the first scrambling sequence and an initial value of a Generator for the second scrambling sequence being the same.

In one embodiment, the statement in the claims that "the first PDCCH candidate has a same scrambling as the second PDCCH candidate" includes the following meaning: the first node in the present application assumes that the first PDCCH candidate has a same scrambling as the second PDCCH candidate.

In one embodiment, the statement in the claims that "the first PDCCH candidate has a same scrambling as the second PDCCH candidate" includes the following meaning: a first scrambling sequence is a scrambling sequence of a PDCCH carried by the first PDCCH candidate, and a second scrambling sequence is a scrambling sequence of a PDCCH carried by the second PDCCH candidate, an initial value of a generating register for the first scrambling sequence and an initial value of a generating register for the second scrambling sequence being the same.

In one embodiment, the statement in the claims that "the first PDCCH candidate has a same scrambling as the second PDCCH candidate" includes the following meaning: a first scrambling sequence is a scrambling sequence of a PDCCH carried by the first PDCCH candidate, and a second scrambling sequence is a scrambling sequence of a PDCCH carried by the second PDCCH candidate, the same one Gold Sequence of a length 31 generates the first scrambling sequence and the second scrambling sequence with identical Generator initial values.

In one embodiment, the statement in the claims that "the first PDCCH candidate has a same scrambling as the second PDCCH candidate" includes the following meaning: the first node in the present application assumes that a first bit block having been through scrambling of a first scrambling sequence is used for generating a physical channel carried by the first PDCCH candidate, and the first node in the present application assumes that a second bit block having been through scrambling of a second scrambling sequence is used for generating a physical channel carried by the second PDCCH candidate, the first scrambling sequence and the second scrambling sequence being the same; the first bit block comprises multiple bits, and the second bit block comprises multiple bits. In one subsidiary embodiment of the above embodiment, the first bit block is an output by DCI through Channel Coding and Rate Matching, while the second bit block is an output by DCI through Channel Coding and Rate Matching. In one subsidiary embodiment of the above embodiment, the first bit block being through scrambling of the first scrambling sequence is before Modulation, while the second bit block being through scrambling of the first scrambling sequence is before Modulation. In one subsidiary embodiment of the above embodiment, a physical channel carried by the first PDCCH candidate is generated by the first bit block sequentially through scrambling of the first scrambling sequence, modulation, Mapping to physical resources, Orthogonal Frequency Division Multiplexing baseband signal generation, and Modulation and Upconversion, while a physical channel carried by the second PDCCH candidate is generated by the second bit block sequentially through scrambling of the second scrambling sequence, modulation, Mapping to physical resources, Orthogonal Frequency Division Multiplexing baseband signal generation, and Modulation and Upconversion.

In one embodiment, the statement in the claims that "a DCI format carried by the first PDCCH candidate is of the same size as a DCI format carried by the second PDCCH candidate" includes the following meaning: the first node in the present application assumes that the DCI format carried by the first PDCCH candidate and the DCI format carried by the second PDCCH candidate are of the same size.

In one embodiment, the statement in the claims that "a DCI format carried by the first PDCCH candidate is of the same size as a DCI format carried by the second PDCCH candidate" includes the following meaning: a DCI Payload carried by the first PDCCH candidate and a DCI Payload carried by the second PDCCH candidate are of the same size.

In one embodiment, the statement in the claims that "a DCI format carried by the first PDCCH candidate is of the same size as a DCI format carried by the second PDCCH candidate" includes the following meaning: a number of bits included by the DCI format carried by the first PDCCH candidate and a number of bits included by the DCI format carried by the second PDCCH candidate are equal.

In one embodiment, the statement in the claims that "a DCI format carried by the first PDCCH candidate is of the same size as a DCI format carried by the second PDCCH candidate" includes the following meaning: a number of bits included by a DCI Payload carried by the first PDCCH candidate and a number of bits included by a DCI Payload carried by the second PDCCH candidate are equal.

In one embodiment, the DCI carried by the first PDCCH candidate is of a same Format as that carried by the second PDCCH candidate.

In one embodiment, the DCI carried by the first PDCCH candidate is of a different Format than that carried by the second PDCCH candidate.

In one embodiment, a DCI Format carried by the first PDCCH candidate is one of 0_2 or 1_2.

In one embodiment, a DCI Format carried by the first PDCCH candidate is one of 0_2, 0_3, 1_2 or 1_3.

In one embodiment, a DCI Format carried by the first PDCCH candidate is one of 0_1, 0_2, 0_3, 1_1, 1_2 or 1_3.

In one embodiment, a DCI Format carried by the first PDCCH candidate is one of 0_1, 0_2, 1_1 or 1_2.

In one embodiment, a DCI Format carried by the first PDCCH candidate is one of DCI Formats that can be supported.

In one embodiment, a DCI Format carried by the first PDCCH candidate is one of DCI Formats that are supported by a UE-Specific Search Space Set (USS set).

In one embodiment, a DCI Format carried by the second PDCCH candidate is one of 0_2 or 1_2.

In one embodiment, a DCI Format carried by the second PDCCH candidate is one of 0_2, 0_3, 1_2 or 1_3.

In one embodiment, a DCI Format carried by the second PDCCH candidate is one of 0_1, 0_2, 0_3, 1_1, 1_2 or 1_3.

In one embodiment, a DCI Format carried by the second PDCCH candidate is one of 0_1, 0_2, 1_1 or 1_2.

In one embodiment, a DCI Format carried by the second PDCCH candidate is one of DCI Formats that are supported by a UE-Specific Search Space Set (USS set).

In one embodiment, an index of the first PDCCH candidate is an index of the first PDCCH candidate in a search space set to which the first PDCCH candidate belongs, and an index of the second PDCCH candidate is an index of the second PDCCH candidate in a search space set to which the second PDCCH candidate belongs.

In one embodiment, an index of the first PDCCH candidate is an index of a search space set to which the first PDCCH candidate belongs, and an index of the second PDCCH candidate is an index of a search space set to which the second PDCCH candidate belongs.

In one embodiment, the first PDCCH candidate belongs to a first search space set, the first search space set comprising R1 control channel candidates in a first time window, the R1 control channel candidates are sequentially indexed, and the first PDCCH candidate is one of the R1 control channel candidates, and an index of the first PDCCH candidate is an index of the first PDCCH candidate among the R1 control channel candidates, R1 being a positive integer greater than 1. In one subsidiary embodiment of the above embodiment, the R1 is equal to a configurable positive integer, or the R1 is equal to a pre-defined positive integer.

In one embodiment, the second PDCCH candidate belongs to a second search space set, the second search space set comprising R2 control channel candidates in a first time window, the R2 control channel candidates are sequentially indexed, and the second PDCCH candidate is one of the R2 control channel candidates, and an index of the second PDCCH candidate is an index of the second PDCCH candidate among the R2 control channel candidates, R2 being a positive integer greater than 1. In one subsidiary embodiment of the above embodiment, the R2 is equal to a configurable positive integer, or the R2 is equal to a pre-defined positive integer.

In one embodiment, an index of the first PDCCH candidate is an index of a start CCE occupied by the first PDCCH candidate, and an index of the second PDCCH candidate is an index of a start CCE occupied by the second PDCCH candidate.

In one embodiment, an index of the first PDCCH candidate is an index of a start REG included by a start CCE occupied by the first PDCCH candidate, and an index of the second PDCCH candidate is an index of a start REG included by a start CCE occupied by the second PDCCH candidate.

In one embodiment, an index of the first PDCCH candidate is an index of an end CCE occupied by the first PDCCH candidate, and an index of the second PDCCH candidate is an index of an end CCE occupied by the second PDCCH candidate.

In one embodiment, an index of the first PDCCH candidate is an index of a CORESET to which CCEs occupied by the first PDCCH candidate belong, and an index of the second PDCCH candidate is an index of a CORESET to which CCEs occupied by the second PDCCH candidate belong.

In one embodiment, an index of the first PDCCH candidate is larger than an index of the second PDCCH candidate.

In one embodiment, an index of the first PDCCH candidate is smaller than an index of the second PDCCH candidate.

In one embodiment, an index of the first PDCCH candidate is greater than 0.

In one embodiment, an index of the first PDCCH candidate may be equal to 0.

In one embodiment, an index of the first PDCCH candidate is a non-negative integer.

In one embodiment, an index of the second PDCCH candidate is a non-negative integer.

In one embodiment, of the first PDCCH candidate or the second PDCCH candidate only one PDCCH candidate with a smaller index is counted for monitoring.

In one embodiment, of the first PDCCH candidate or the second PDCCH candidate only one PDCCH candidate with a larger index is counted for monitoring.

In one embodiment, of the first PDCCH candidate or the second PDCCH candidate only one PDCCH candidate is counted for monitoring according to a pre-defined rule.

In one embodiment, it is determined that of the first PDCCH candidate or the second PDCCH candidate only one PDCCH candidate is counted for monitoring according to a relationship between the first PDCCH candidate or the second PDCCH candidate and a pre-defined PDCCH candidate.

In one embodiment, the statement in the claims that "only one PDCCH candidate between the first PDCCH candidate and the second PDCCH candidate is counted for monitoring" includes the following meaning: of the first PDCCH candidate or the second PDCCH candidate only one PDCCH candidate is counted as one PDCCH monitoring.

In one embodiment, the statement in the claims that "only one PDCCH candidate between the first PDCCH candidate and the second PDCCH candidate is counted for monitoring" includes the following meaning: the first PDCCH candidate and the second PDCCH candidate are counted together as one PDCCH monitoring.

In one embodiment, the statement in the claims that "only one PDCCH candidate between the first PDCCH candidate and the second PDCCH candidate is counted for monitoring" includes the following meaning: of the first PDCCH candidate or the second PDCCH candidate only one PDCCH candidate is counted as one PDCCH Blind Decoding (BD).

In one embodiment, the statement in the claims that "only one PDCCH candidate between the first PDCCH candidate and the second PDCCH candidate is counted for monitoring" includes the following meaning: the first PDCCH candidate and the second PDCCH candidate are counted together as one PDCCH Blind Decoding (BD).

In one embodiment, the statement in the claims that "only one PDCCH candidate between the first PDCCH candidate and the second PDCCH candidate is counted for monitoring" includes the following meaning: of the first PDCCH candidate or the second PDCCH candidate only one PDCCH candidate affects the count of the number of times of PDCCH Candidate monitoring.

In one embodiment, the statement in the claims that "only one PDCCH candidate between the first PDCCH candidate and the second PDCCH candidate is counted for monitoring" includes the following meaning: of the first PDCCH candidate or the second PDCCH candidate only one PDCCH candidate affects the Budget of the number of times of PDCCH Candidate monitoring.

In one embodiment, the statement in the claims that "only one PDCCH candidate between the first PDCCH candidate and the second PDCCH candidate is counted for monitoring" includes the following meaning: of the first PDCCH candidate or the second PDCCH candidate only one PDCCH candidate is used in the calculation of droppings of search space sets.

In one embodiment, the statement in the claims that "only one PDCCH candidate between the first PDCCH candidate and the second PDCCH candidate is counted for monitoring" includes the following meaning: of the first PDCCH candidate or the second PDCCH candidate only one PDCCH candidate is used in the calculation of overbookings of search space sets.

Embodiment 12

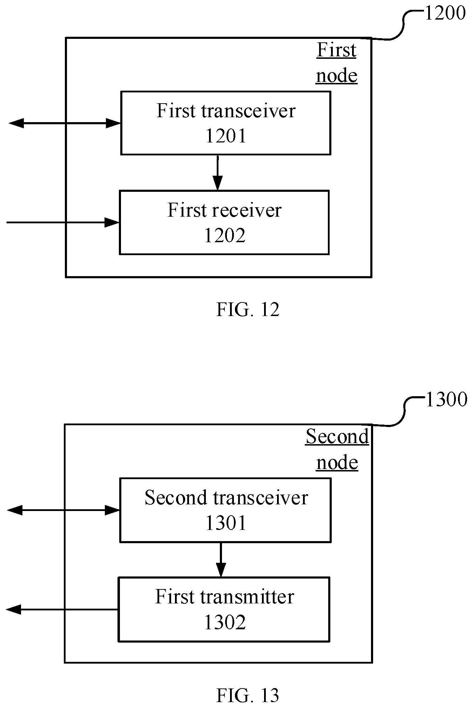

Embodiment 12 illustrates a structure block diagram of a processing device in a first node in an example, as shown in FIG. 12. In FIG. 12, a processing device 1200 in the first node comprises a first transceiver 1201 and a first receiver 1202. The first transceiver 1201 comprises the transmitter/receiver 456 (comprising the antenna 460), the receiving processor 452, the transmitting processor 455 and the controller/processor 490 in FIG. 4 of the present application; the first receiver 1202 comprises the transmitter/receiver 456 (comprising the antenna 460), the receiving processor 452 and the controller/processor 490 in FIG. 4 of the present application.

In Embodiment 12, the first transceiver 1201 receives a first information block, the first information block being used to determine a first cell set, the first cell set including multiple serving cells; and the first receiver 1202 monitors at least 1 PDCCH candidate in a first time window, the first time window including at least 1 multicarrier symbol consecutive in time domain; herein, a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0.

In one embodiment, a characteristic cell subset is a cell subset included in the first cell set, and the characteristic cell subset includes multiple serving cells; a number of serving cell(s) being counted for the characteristic cell subset is unequal to the number of serving cells included in the characteristic cell subset.

In one embodiment, the first transceiver 1201 receives a second information block; herein, the second information block is used to determine a first scaling factor, the first scaling factor being no less than 0; a product of the number of serving cell(s) counted for at least one cell subset included in the first cell set and the first scaling factor is used to determine the characteristic proportional value.

In one embodiment, each serving cell included in the first cell set corresponds to a scheduling indication value, serving cells included in the first cell set that correspond to equal scheduling indication values and have the same scheduling cell form a cell subset in the first cell set; a number of bits of at least one field included in a DCI format or a number of fields included in a DCI format is related to a number of serving cells included in the cell subset in the first cell set being scheduled.

In one embodiment, the first transceiver 1201 is used to transmit a third information block; herein, the first threshold is equal to a maximum integer that is no greater than a first intermediate value, and the second threshold is equal to a maximum integer that is no greater than a second intermediate value; the third information block is used to indicate a first quantity value, the first quantity value being a positive integer, and a number of serving cell(s) included in any cell subset included in the first cell set is no greater than the first quantity value; the first SCS is used to determine a first reference quantity value and a second reference quantity value; the first quantity value, the first reference quantity value and the characteristic proportional value are used together to determine the first intermediate value, while the first quantity value, the second reference quantity value and the characteristic proportional value are used together to determine the second intermediate value.

In one embodiment, a cell subset included in the first cell set corresponds to a first identifier, and the cell subset corresponding to the first identifier includes multiple serving cells, and a scheduling cell for all the serving cells included in the cell subset corresponding to the first identifier is a target scheduling cell; the first identifier is used to determine in a search space set on the target scheduling cell a PDCCH candidate that is used to schedule the cell subset corresponding to the first identifier.

In one embodiment, a first PDCCH candidate and a second PDCCH candidate are both used to schedule one same cell subset included in the first cell set, the first PDCCH candidate and the second PDCCH candidate occupying same CCE(s), and the first PDCCH candidate has a same scrambling as the second PDCCH candidate, a DCI format carried by the first PDCCH candidate is of the same size as a DCI format carried by the second PDCCH candidate, and an index of the first PDCCH candidate is unequal to an index of the second PDCCH candidate; only one PDCCH candidate between the first PDCCH candidate and the second PDCCH candidate is counted for monitoring.

## Embodiment 13

Embodiment 13 illustrates a structure block diagram of a processing device in a second node in an example, as shown in FIG. 13. In FIG. 13, a processing device 1300 in the second node comprises a second transceiver 1301 and a first transmitter 1302. The second transceiver 1301 comprises the transmitter/receiver 416 (comprising the antenna 460), the receiving processor 412, the transmitting processor 415 and the controller/processor 440 in FIG. 4 of the present application; the first transmitter 1302 comprises the transmitter/receiver 416 (comprising the antenna 460), the transmitting processor 415 and the controller/processor 440 in FIG. 4 of the present application.

In Embodiment 13, the second transceiver 1301 transmits a first information block, the first information block being used to determine a first cell set, the first cell set including multiple serving cells; and the first transmitter 1302 determines at least 1 PDCCH candidate in a first time window, the first time window including at least 1 multicarrier symbol consecutive in time domain; herein, a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0.

In one embodiment, a characteristic cell subset is a cell subset included in the first cell set, and the characteristic cell subset includes multiple serving cells; a number of serving cell(s) being counted for the characteristic cell subset is unequal to the number of serving cells included in the characteristic cell subset.

In one embodiment, the second transceiver 1301 transmits a second information block; herein, the second information block is used to indicate a first scaling factor, the first scaling factor being no less than 0; a product of the number of serving cell(s) counted for at least one cell subset included in the first cell set and the first scaling factor is used to determine the characteristic proportional value.

In one embodiment, each serving cell included in the first cell set corresponds to a scheduling indication value, serving cells included in the first cell set that correspond to equal scheduling indication values and have the same scheduling cell form a cell subset in the first cell set; a number of bits of at least one field included in a DCI format or a number of fields included in a DCI format is related to a number of serving cells included in the cell subset in the first cell set being scheduled.

In one embodiment, the second transceiver 1301 receives a third information block; herein, the first threshold is equal to a maximum integer that is no greater than a first intermediate value, and the second threshold is equal to a maximum integer that is no greater than a second intermediate value; the third information block is used to indicate a first quantity value, the first quantity value being a positive integer, and a number of serving cell(s) included in any cell subset included in the first cell set is no greater than the first quantity value; the first SCS is used to determine a first reference quantity value and a second reference quantity value; the first quantity value, the first reference quantity value and the characteristic proportional value are used together to determine the first intermediate value, while the first quantity value, the second reference quantity value and the characteristic proportional value are used together to determine the second intermediate value.

In one embodiment, a cell subset included in the first cell set corresponds to a first identifier, and the cell subset corresponding to the first identifier includes multiple serving cells, and a scheduling cell for all the serving cells included in the cell subset corresponding to the first identifier is a target scheduling cell; the first identifier is used to determine in a search space set on the target scheduling cell a PDCCH candidate that is used to schedule the cell subset corresponding to the first identifier.

In one embodiment, a first PDCCH candidate and a second PDCCH candidate are both used to schedule one same cell subset included in the first cell set, the first PDCCH candidate and the second PDCCH candidate occupying same CCE(s), and the first PDCCH candidate has a same scrambling as the second PDCCH candidate, a DCI format carried by the first PDCCH candidate is of the same size as a DCI format carried by the second PDCCH candidate, and an index of the first PDCCH candidate is unequal to an index of the second PDCCH candidate; only one PDCCH candidate between the first PDCCH candidate and the second PDCCH candidate is counted for monitoring.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The first node or the second node, or UE or terminal includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, telecontrolled aircrafts, etc. The base station or network equipment in the present application includes but is not limited to macro-cellular base stations, micro-cellular base stations, home base stations, relay base station, eNB, gNB, Transmitter Receiver Point (TRP), relay satellite, satellite base station, airborne base station and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

**Claims**

1. A first node for wireless communications, comprising:

a transceiver, receiving a first information block, the first information block being used to determine a first cell set, the first cell set including multiple serving cells; and
a first receiver, monitoring at least 1 PDCCH candidate in a first time window, the first time window including at least 1 multicarrier symbol consecutive in time domain;
wherein a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0.

2. The first node according to claim 1, **characterized in that** a characteristic cell subset is a cell subset included in the first cell set, and the characteristic cell subset includes multiple serving cells; a number of serving cell(s) being counted for the characteristic cell subset is unequal to the number of serving cells included in the characteristic cell subset.

3. The first node according to claim 1 or 2, **characterized in that** the first transceiver receives a second information block; wherein the second information block is used to determine a first scaling factor, the first scaling factor being no less than 0; a product of the number of serving cell(s) counted for at least one cell subset included in the first cell set and the first scaling factor is used to determine the characteristic proportional value.

4. The first node according to any of claims 1-3, **characterized in that** each serving cell included in the first cell set corresponds to a scheduling indication value, serving cells included in the first cell set that correspond to equal scheduling indication values and have a same scheduling cell form a cell subset in the first cell set; at least one of a number of bits of at least one field included in a DCI format or a number of fields included in a DCI format is related to a number of serving cells included in the cell subset in the first cell set being scheduled.

5. The first node according to any of claims 1-4, **characterized in that** the first transceiver is used to transmit a third information block; wherein the first threshold is equal to a maximum integer that is no greater than a first intermediate value, and the second threshold is equal to a maximum integer that is no greater than a second intermediate value; the third information block is used to indicate a first quantity value, the first quantity value being a positive integer, and a number of serving cell(s) included in any cell subset included in the first cell set is no greater than the first quantity value; the first SCS is used to determine a first reference quantity value and a second reference quantity value; the first quantity value, the first reference quantity value and the characteristic proportional value are used together to determine the first intermediate value, while the first quantity value, the second reference quantity value and the characteristic proportional value are used together to determine the second intermediate value.

6. The first node according to any of claims 1-5, **characterized in that** a cell subset included in the first cell set corresponds to a first identifier, and the cell subset corresponding to the first identifier includes multiple serving cells, and a scheduling cell for all the serving cells included in the cell subset corresponding to the first identifier is a target scheduling cell; the first identifier is used to determine in a search space set on the target scheduling cell a PDCCH candidate that is used to schedule the cell subset corresponding to the first identifier.

7. The first node according to any of claims 1-6, **characterized in that** a first PDCCH candidate and a second PDCCH candidate are both used to schedule one same cell subset included in the first cell set, the first PDCCH candidate and the second PDCCH candidate occupying same CCE(s), and the first PDCCH candidate has a same scrambling as the second PDCCH candidate, a DCI format carried by the first PDCCH candidate is of the same size as a DCI format carried by the second PDCCH candidate, and an index of the first PDCCH candidate is unequal to an index of the second PDCCH candidate; only one PDCCH candidate between the first PDCCH candidate and the second PDCCH candidate is counted for monitoring.

8. A second node for wireless communications, comprising:

a second transceiver, transmitting a first information block, the first information block being used to determine a first cell set, the first cell set including multiple serving cells; and
a first transmitter, determining at least 1 PDCCH candidate in a first time window, the first time window including at least 1 multicarrier symbol consecutive in time domain;
wherein a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0.

9. A method in a first node for wireless communications, comprising:

receiving a first information block, the first information block being used to determine a first cell set, the first cell set including multiple serving cells; and
monitoring at least 1 PDCCH candidate in a first time window, the first time window including at least 1 multicarrier symbol consecutive in time domain;
wherein a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0.

10. A method in a second node for wireless communications, comprising:

transmitting a first information block, the first information block being used to determine a first cell set, the first cell set including multiple serving cells; and
determining at least 1 PDCCH candidate in a first time window, the first time window including at least 1 multicarrier symbol consecutive in time domain;
wherein a subcarrier spacing (SCS) of subcarrier(s) occupied in frequency domain by the at least 1 PDCCH candidate being monitored in the first time window is equal to a first SCS, the first SCS being used to determine a time length of one multicarrier symbol included in the first time window; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the at least 1 PDCCH candidate being monitored in the first time window is used to schedule at least one serving cell included in the first cell set, the first cell set including at least one cell subset, any cell subset included in the first cell set including at least one serving cell; all serving cell(s) included in one cell subset in the first cell set can be scheduled by one same PDCCH candidate; the first threshold and the second threshold are both related to a characteristic proportional value, and a number of serving cell(s) counted for at least one cell subset included in the first cell set is used to determine the characteristic proportional value, the characteristic proportional value being no less than 0.

| receiving first information block | —101 |

100

| monitoring at least 1 PDCCH candidate in first time window | —102 |

FIG. 1

**5GS/EPS 200**

HSS/ UDM — 220

NR- RAN/EUTRAN 202

UE — 201

NR/evolved node B — 203

other NR/evolved nodes B — 204

UE — 241

MME/A MF/SMF — 211

other MMEs/ AMFs/SMFs — 214

S- GW/UPF — 212

P- GW/UPF — 213

Internet service — 230

5GC/EPC 210

FIG. 2

**Control plane 300**

305

| L3 | RRC — 306 |
| L2 | PDCP — 304 |
| | RLC — 303 |
| | MAC — 302 |
| L1 | PHY — 301 |

**User plane 350**

355

| L2 | SDAP — 356 |
| | PDCP — 354 |
| | RLC — 353 |
| | MAC — 352 |
| L1 | PHY — 351 |

FIG. 3

FIG. 4

| Second node N500 | | First node U550 |
|---|---|---|

S551. transmitting third
information block

← third information block

S501. receiving third
information block

S502. transmitting first
information block

first information block →

S552. receiving first
information block

S503. transmitting second
information block

second information block →

S553. receiving second
information block

S504. determining at least one PDCCH
candidate in first time window

at least one PDCCH candidate →

S554. monitoring the at least one PDCCH
candidate in the first time window

End          End

FIG. 5

⌂ a serving cell in the first cell set          ▨ a serving cell in characteristic cell subset

Frequency →

FIG. 6

| the number of serving cell(s) counted for at least one cell subset included in the first cell set | × | the first scaling factor | ⟹ | the characteristic proportional value |
|---|---|---|---|---|

FIG. 7

FIG. 8

FIG. 9

FIG. 10

FIG. 11

1200

First
node

First transceiver
1201

First receiver
1202

FIG. 12

1300

Second
node

Second transceiver
1301

First transmitter
1302

FIG. 13

## INTERNATIONAL SEARCH REPORT

| International application No. |
|---|
| **PCT/CN2023/079536** |

**A. CLASSIFICATION OF SUBJECT MATTER**

H04L27/26(2006.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, 3GPP, IETF, EPONPL: 信息块, 小区, 集合, 时间窗, 检测, 监测, 候选, PDCCH, 时域, 连续, 多载波, 频域, 时间长度, 不大于, 小于等于, 阈值, 非重叠CCE, 子集, 调度, 指示, 特征比例, 缩放因子, 索引, 扰码, information block, cell, set, time window, detection, monitoring, candidate, PDCCH, time domain, consecutive, multi-carrier, frequency domain, time length, not greater than, less than or equal to, threshold, non-overlapping CCE, subset, scheduling, indication, feature scale, scaling factor, index, scrambling code

**C. DOCUMENTS CONSIDERED TO BE RELEVANT**

| Category* | Citation of document, with indication, where appropriate, of the relevant passages | Relevant to claim No. |
|---|---|---|
| A | CN 112437488 A (QUECTEL WIRELESS SOLUTIONS CO., LTD.) 02 March 2021 (2021-03-02)<br>  description, paragraphs [0003]-[0049] | 1-10 |
| A | CN 112437489 A (QUECTEL WIRELESS SOLUTIONS CO., LTD.) 02 March 2021 (2021-03-02)<br>  entire document | 1-10 |
| A | CN 113473606 A (HUAWEI TECHNOLOGIES CO., LTD.) 01 October 2021 (2021-10-01)<br>  entire document | 1-10 |
| A | US 2019150142 A1 (ASUSTEK COMP. INC.) 16 May 2019 (2019-05-16)<br>  entire document | 1-10 |
| A | WO 2019022519 A1 (SAMSUNG ELECTRONICS CO., LTD.) 31 January 2019 (2019-01-31)<br>  entire document | 1-10 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 June 2023** | **25 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/079536** |

**C. DOCUMENTS CONSIDERED TO BE RELEVANT**

| Category* | Citation of document, with indication, where appropriate, of the relevant passages | Relevant to claim No. |
|---|---|---|
| A | ERICSSON. ""R1-2001784 Remaining Issue of PDCCH Enhancements for NR URLLC"" *3GPP tsg_ran\wg1_rl1*, 11 April 2020 (2020-04-11), entire document | 1-10 |

Form PCT/ISA/210 (second sheet) (July 2022)

<table>
<tr><td colspan="2" align="center">**INTERNATIONAL SEARCH REPORT**<br>**Information on patent family members**</td><td colspan="2">International application No.<br><br>**PCT/CN2023/079536**</td></tr>
</table>

| Patent document cited in search report | Publication date (day/month/year) | Patent family member(s) | Publication date (day/month/year) |
|---|---|---|---|
| CN 112437488 A | 02 March 2021 | None | |
| CN 112437489 A | 02 March 2021 | None | |
| CN 113473606 A | 01 October 2021 | None | |
| US 2019150142 A1 | 16 May 2019 | EP 3484088 A1 | 15 May 2019 |
| | | EP 3484088 B1 | 03 November 2021 |
| | | US 2021243757 A1 | 05 August 2021 |
| | | EP 3930247 A1 | 29 December 2021 |
| | | US 10708912 B2 | 07 July 2020 |
| | | US 2020280983 A1 | 03 September 2020 |
| | | US 11012999 B2 | 18 May 2021 |
| WO 2019022519 A1 | 31 January 2019 | None | |

Form PCT/ISA/210 (patent family annex) (July 2022)